(19) Europäisches Patentamt / European Patent Office / Office européen des brevets

(11) **EP 1 163 751 B1**

(12) **EUROPEAN PATENT SPECIFICATION**

(45) Date of publication and mention of the grant of the patent:
**30.03.2011 Bulletin 2011/13**

(51) Int Cl.:
*H04J 14/00* (2006.01)   *H04J 14/02* (2006.01)
*H04B 10/00* (2006.01)   *G02B 6/34* (2006.01)

(21) Application number: **00992467.1**

(86) International application number:
**PCT/US2000/041022**

(22) Date of filing: **27.09.2000**

(87) International publication number:
**WO 2001/039380 (31.05.2001 Gazette 2001/22)**

(54) **OTPICAL MUX/DEMUX**

OPTISCHER MUX/DEMUX

MUX-DEMUX OPTIQUE

(84) Designated Contracting States:
**DE GB**

(30) Priority: **01.10.1999   US 157265 P**
**19.11.1999   US 166609 P**
**29.11.1999   US 168148 P**
**13.12.1999   US 170452 P**
**20.12.1999   US 172741 P**
**29.12.1999   US 473774**
**06.01.2000   US 479455**

(43) Date of publication of application:
**19.12.2001   Bulletin 2001/51**

(73) Proprietor: **Finisar Corporation**
**Sunnyvale, CA 94089 (US)**

(72) Inventor: **XIE, Ping**
**San Jose, CA 95131 (US)**

(74) Representative: **Finnie, Peter John**
**Gill Jennings & Every LLP**
**The Broadgate Tower**
**20 Primrose Street**
**London EC2A 2ES (GB)**

(56) References cited:
**EP-A- 0 370 410      US-A- 5 606 439**
**US-A- 5 606 439      US-A- 5 694 233**
**US-A- 5 694 233      US-A- 5 867 291**
**US-A- 5 867 291**

**Description**

**BACKGROUND OF THE INVENTION**

1. Field of Invention

The present invention generally relates to optical fiber communication networks, and more particularly to a splitting system for a multi-channel optical fiber communication network for multiplexing and/or de-multiplexing an optical signal with a plurality of individual channels and various wavelengths.

2. Description of the Related Art

The telecommunications network serving the United States and the rest of the world is presently evolving from analog to digital transmission with ever increasing bandwidth requirements. Fiber optic cable has proved to be a valuable tool, replacing copper cable in nearly every application from large trunks to subscriber distribution plants. Fiber optic cable is capable of carrying much more information than copper with lower attenuation.

The T-1 standards committee ANSI has provided a draft document, "ANSI T1.105-1988", dated March 10, 1988, which sets forth specifications for rate and format of signals which are to be used in optical interfaces. The provided specifications detail the Synchronous Optical Network (SONET) standard. SONET defines a hierarchy of multiplexing levels and standard protocols which allow efficient use of the wide bandwidth of fiber optic cable, while providing a means to merge lower level DSO and DS 1 signals into a common medium. In essence, SONET established a uniform standardization transmission and signaling scheme, which provided a synchronous transmission format that is compatible with all current and anticipated signal hierarchies. Because of the nature of fiber optics, expansion of bandwidth is easily accomplished.

Currently this expansion of bandwidth is being accomplished by what is known as "wavelength division multiplexing" (WDM), in which separate subscriber/data sessions may be handled concurrently on a single optic fiber by means of modulation of each of those subscriber datastreams on different portions of the light spectrum. Therefore, WDM is the optical equivalent of frequency division multiplexing (FDM). Current implementations of WDM involve as many as 128 semiconductor lasers each lasing at a specific center frequency within the range of 1525-1575 nm. A wavelength division multiplexer (WDM) is usually a passive optical network or device. The WDM can be used to divide wavelengths (or channels) from a multi-channel optical signal or to combine various wavelengths (or channels) on respective optical paths into one multi-channel optical signal on one optical path. Each subscriber datastream is optically modulated onto the output beam of a corresponding semiconductor laser. The modulated information from each of the semiconductor lasers is combined onto a single optic fiber for transmission.

There are three classes of WDM's: coarse, intermediate, and dense. Coarse WDM's are configured for dividing and combining two wavelengths (or channels) that are spaced relatively far apart, e.g., 1310/1550 nanometers. The WDM is used to separate wavelength bands (with 100 nm, i.e., 13 terahertz bandwidth) centered around 1310 nm and 1550 nm. Intermediate WDM's are configured for dividing and combining two or three wavelengths (or channels) that are spaced closer than those of the coarse WDM's, e.g., a 1540/1560 nm WDM used to put to channels approximately 20 nm, i.e. 2.5 terahertz, apart in the 1550 nm wavelength bands. Currently, a third category, dense WDM's (also referred to as DWDM's) are configured for dividing and combining 4, 8, 16, 32, 64, 128 or more wavelengths (or channels) that are very closely spaced. The spacing between channels is constantly being reduced as the resolution and signal separation capabilities of multiplexers and de-multiplexers are improved. Current International Telecommunications Union (ITU) specifications call for channel separations of approximately 0.4 nm, i.e., 50 GigaHertz. At this separation, as many as 128 channels may be carried by a single fiber in a bandwidth range within the same capacity of an erbium doped fiber amplifier (EDFA).

Because of the close spacing between the channels in a DWDM, it is desirable to design a DWDM with flat pass bands in order to increase the error tolerance. This is primarily because the center wavelength of a pass band slips with temperature, usually on the order of about 0.011 nm, i.e., 1.4 GigaHertz per degree centigrade. Further, the cascading of the DWDM stages causes the pass bands to become narrower and each DWDM down the chain. Therefore, the larger the pass bands the greater the shift tolerance of the channel.

Further, it is desirable to design a DWDM with low loss to leave more room for loss in other components in network. For example, if losses are reduced, the distance the fiber reaches, i.e. the span, can be longer. As another example, if the power of the transmitting lasers is allowed to be reduced, then inexpensive lasers can be used.

Various devices, such as multi-stage band and comb splitters, have been proposed to fill these new demanding requirements and none are fully satisfactory.

In a multi-stage band splitter, the first stage makes a coarse split of two wavelength ranges, and subsequent stages make finer and finer splits of sub-bands within each of the wavelength ranges. In this scheme, the WDM's of the subsequent stages are largest in quantity and the most expensive to fabricate because they have the smallest channel spacing.

In a multi-stage comb splitter, the first de-multiplexing stage filters out two interlaced periodic sets of relatively narrow band passes and the subsequent stages employ wider band pass periodic filters until the individual channels are demultiplexed.

In either case, noise and inter-channel interference are limiting factors in the handling of increasingly narrow band pass requirements. Multi-layer thin-film filters can be used to construct optical filters in bulk optics, but they are undesirable because of an increase in the number of layers, precision of manufacture and expense associated with increasingly narrow band pass requirements. Additionally, thin-film optical filters cannot be readily integrated because of difficulties in coupling to and from fibers. Mach-Zehnder interferometers have been widely employed, but they have a sinusoidal response, giving rise to strongly wavelength dependent transmission and a narrow rejection band. Other designs have encountered a variety of practical problems. Accordingly, there is a need for the new type of optical multiplexer/de-multiplexer which can be easily fabricated, with narrower band pass capabilities.

## SUMMARY OF THE INVENTION

A method and apparatus for multiplexing/de-multiplexing optical signals is disclosed. The method and apparatus are applicable to a range of optical multiplexing techniques including, but not limited to: wavelength division multiplexing (WDM), dense wavelength division multiplexing (DWDM) and frequency division multiple accessing (FDMA). The disclosed devices do not require active components. The disclosed devices may be implemented with fiber or fiberless optical communications systems including telecommunication systems. The devices may be used on their own or as part of a larger system such as a multi-stage mux/demux, an optical switch or router. The devices exhibit a small form factor. They may be precisely tuned to a specific wavelength grid. In an embodiment of the invention, the devices are passively thermally stabilized with the result that their tuning is substantially invariant across a wide temperature range.

In an embodiment of the invention, an optical device for operating on optical signals between a first port communicating odd channels and even channels and a second port communicating the odd channels together with a third port communicating the even channels is disclosed. Adjacent orders of the odd and even channels are evenly spaced apart and each centered on a corresponding gridline of a selected wavelength grid. The optical device includes a linear polarizer and a plurality of wave plates. The linear polarizer couples to the first port for linearly polarizing optical signals. The plurality of wave plates include a first and a second I/O interface. The plurality of wave plates optically couple at a first I/O interface to the linear polarizer. The plurality of wave plates rotate both odd and even channel components of an optical beam between a linear and an orthogonal relationship depending on the propagation direction. Each of the plurality of wave plates of a selected length and a selected index of refraction and the selected length and the selected index of refraction together determinative of a free spectral range corresponding to a spacing between adjacent gridlines of the selected wavelength grid. Each of the plurality of wave plates is tuned to even symmetry with the selected wavelength grid.

In an alternate embodiment of the invention, a method for splitting/combining odd and even channels of an optical beam between a first port communicating odd channels and even channels and a second port communicating the odd channels together with a third port communicating the even channels is disclosed. Adjacent orders of the odd and even channels are evenly spaced apart and each centered on a corresponding gridline of a selected wavelength grid. The method for splitting/combining comprises;

linearly polarizing the optical beam at the first port;

successively retarding e-ray and o-ray components of one of the odd channels and the even channels by integer multiples of $2\pi$ and of an other of the odd channels and the even channels by odd integer multiples of $\pi$, both at a free spectral range corresponding to the spacing between gridlines of the selected wavelength grid, to rotate odd and even channel components of the optical beam between a linear and an orthogonal relationship depending on the propagation direction; and

displacing and combining orthogonally polarized odd and even channel components of an optical beam depending on a propagation direction.

## BRIEF DESCRIPTION OF THE DRAWINGS

These and other features and advantages of the present invention will become more apparent to those skilled in the art from the following detailed description in conjunction with the appended drawings in which:

FIG. 1 shows an embodiment of the invention in which an optical network is coupled to a plurality of data and voice subscriber lines by an optical multiplexer/de-multiplexer utilizing periodic optical filters, according to an embodiment of the current invention.

FIGS. 2A-F are signal diagrams showing the passive signal processing accomplished by the periodic optical filters of the current invention.

FIGS. 3A, C, E, G, I and K are graphs showing the optical axes and polarization vectors associated with periodic optical filters fabricated from 1, 2, 3, 4, 5 and 6 birefringent crystal stacks, respectively.

FIGS. 3B, D, F, H, J and L are isometric side views of periodic optical filters with 1, 2, 3, 4, 5 and 6 birefringent crystal stacks, respectively.

FIG. 3M is an enlarged side elevation view of the 4 crystal stack shown in FIG. 3H, showing the tuning of each crystal's center frequency to a telecommunications grid such as is shown in FIGS. 2E-F.

FIGS. 4AB show an isometric side view and an end view of a periodic optical filter fabricated from a single crystal in four discrete orthogonal orientations.

FIGS. 4CD show top and side elevation views of the periodic optical filter shown in FIGS. 4AB with interfaces to optical ports for multiplexing or de-multiplexing optical signals.

FIG. 4E shows polarization diagrams of light rays at various stages of the mux/demux shown in FIGS. 4CD.

FIGS. 5AB are isometric side and end views of a periodic filter which uses a 2 crystal stack and a folded light path to achieve optical filtration equivalent to that associated with a 4 crystal stack.

FIGS. 5CD are ray trace and polarization diagrams of light rays at various stages of the periodic filter shown in FIGS. 5AB.

FIG. 6AB are isometric side and end views of a periodic filter which uses an alternate side-by-side embodiment of the 2 crystal stack and folded light path shown in FIG. 5AB.

FIGS. 6CD are ray trace and polarization diagrams of light rays at various stages of the periodic filter shown in FIGS. 6AB.

FIG. 6E is a top elevation view of the periodic optical filter shown in FIGS. 6AB with interfaces to optical ports for multiplexing or de-multiplexing optical signals.

FIG. 6F shows polarization diagrams of light rays at various stages of the mux/demux shown in FIGS. 6E.

FIG. 7A is a top plan view of an alternate embodiment of the mux/demux shown in FIG. 6E.

FIG. 7B shows polarization diagrams of light rays at various stages of the mux/demux shown in FIGS. 7A.

FIGS. 8AB are isometric side and end views respectively of a periodic optical filter comprising two wave plates.

FIGS. 8CD are isometric side and end views respectively of a periodic optical filter comprising two wave plates each of which incorporates passive thermal compensation.

FIGS. 8EF are isometric side and end views of an alternate geometry for passive thermal compensation to that shown in FIGS. 8CD.

## DETAILED DESCRIPTION OF THE EMBODIMENTS

A method and apparatus for multiplexing/de-multiplexing optical signals is disclosed. The method and apparatus are applicable to a range of optical multiplexing techniques including, but not limited to: wavelength division multiplexing (WDM), dense wavelength division multiplexing (DWDM), and frequency division multiple accessing (FDMA). The disclosed devices do not require active components. The disclosed devices may be implemented with fiber or fiberless optical communication systems including telecommunication systems. The devices may be used on their own or as part of a larger system, such as a multi-stage mux/demux, an optical switch, or router. The devices exhibit a small form. They may be precisely tuned to a specific wavelength grid.

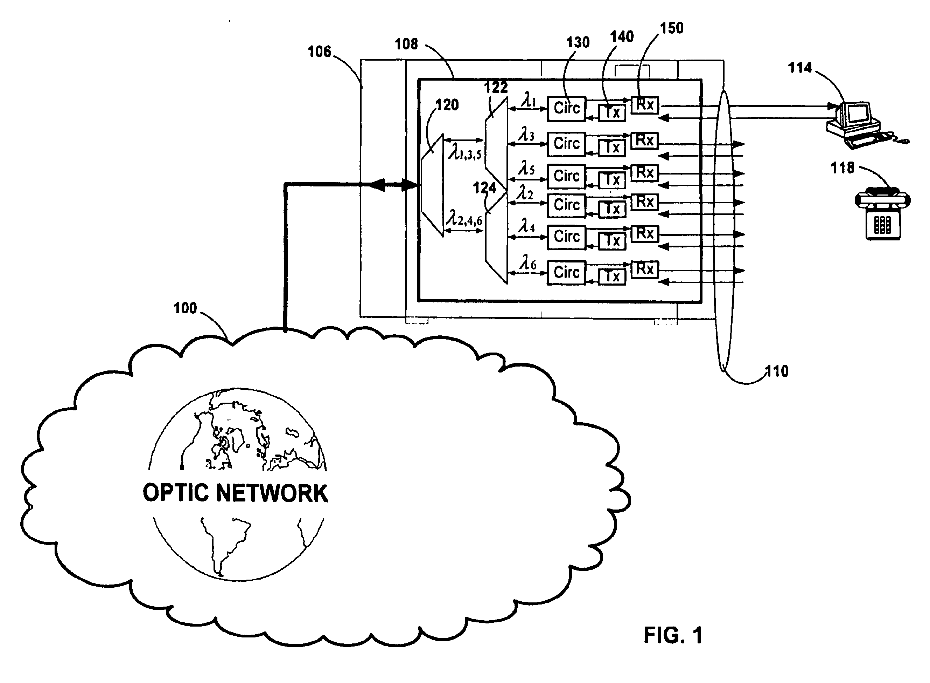

FIG. 1 shows an embodiment of the invention in which an optical network is coupled to a plurality of data and voice subscriber lines by an optical multiplexer/de-multiplexer utilizing periodic optical filters, according to an embodiment of the current invention. An optical network 100, a central office or remote terminal 106, a data terminal 114 and voice terminal 118 are shown. Voice/Data communications on the optical network may be implemented in accordance with the Synchronous Optical Network (SONET) or other standard. The modulated data may be carried on a number of channels according to some multiple access protocols, singly or in combination, including, but not limited to: wavelength division multiplexing (DWDM), dense wavelength division multiplexing (DWDM), frequency division multiple access (FDMA), etc. Currently this expansion of bandwidth is being accomplished by what is known as "wavelength division multiplexing" (WDM), in which separate subscriber/data sessions may be handled concurrently on a single optic fiber by means of modulation of each of those subscriber datastreams on different portions of the light spectrum. The precise center frequencies of each channel are specified by standard setting organizations such as the International Telecommunications Union (ITU). These center frequencies are set forth as part of a wavelength grid which defines the center frequencies and spacing between channels.

At each node in the network, e.g., central office or remote terminal 106, optical transceiver mounted on fiber line cards, e.g., card 108 is provided. Each line card includes a multi-stage multiplexer/de-multiplexer 120, 122-124, a circulator bank 130, a transmitter bank 140, and a receiver bank 150. The multiplexer/de-multiplexer is a passive optical device which divides wavelengths (or channels) from a multi-channel optical signal, or combines various wavelengths (or channels) on respective optical paths into one multi-channel optical signal depending on the propagation direction of the light.

In the receive mode, the first stage mux/demux 120 operates as a de-multiplexer, separating the odd from even channels. The odd and even channels are passed to second stage mux/demux 122-124, respectively. The second stage mux/demux may be implemented at a broader bandwidth than is possible with a first stage, since the channels separation has been increased. Each individual channel is then passed on via a corresponding circulator within circulator bank 130 to a corresponding receiver in receiver bank 150. Each receiver includes a narrow band pass photodetector, framer and decoders. Switches (not shown) couple the receiver over the corresponding one of subscriber lines 110 to a voice or data terminal 118, 114, respectively.

In the transmit mode, each line card transmitter bank 140 includes a bank of lasers, e.g., 128 lasers radiating light at one of the selected center frequencies/channels of the telecommunications grid. A framer permits SONET framing, pointer generation and scrambling for transmission of data from the bank of 128 or more lasers and associated drivers, with each laser radiating at a different wavelength/channel within the range of 1525-1575 nm, as specified by the telecommunications grid. Each subscriber datastream is optically modulated onto the output beam of a corresponding semiconductor laser. The modulated information from each of the semiconductor lasers is passed via a corresponding circulator into the second stage multiplexers 122-124, the outputs of which pass to the first stage multiplexer 120 where they are interlaced as odd and even channels onto a single optic fiber for transmission.

The operation of the line card in the embodiment shown is duplex, meaning that bi-directional communications are possible. Thus, the same device operates as a multiplexer and de-multiplexer.

The optical mux/demux may be implemented as part of a larger telecommunications system such as an optical switch or router, without departing from the scope of the claimed invention. In a router embodiment one or more optical switches would be sandwiched between the opposing mux/demux.

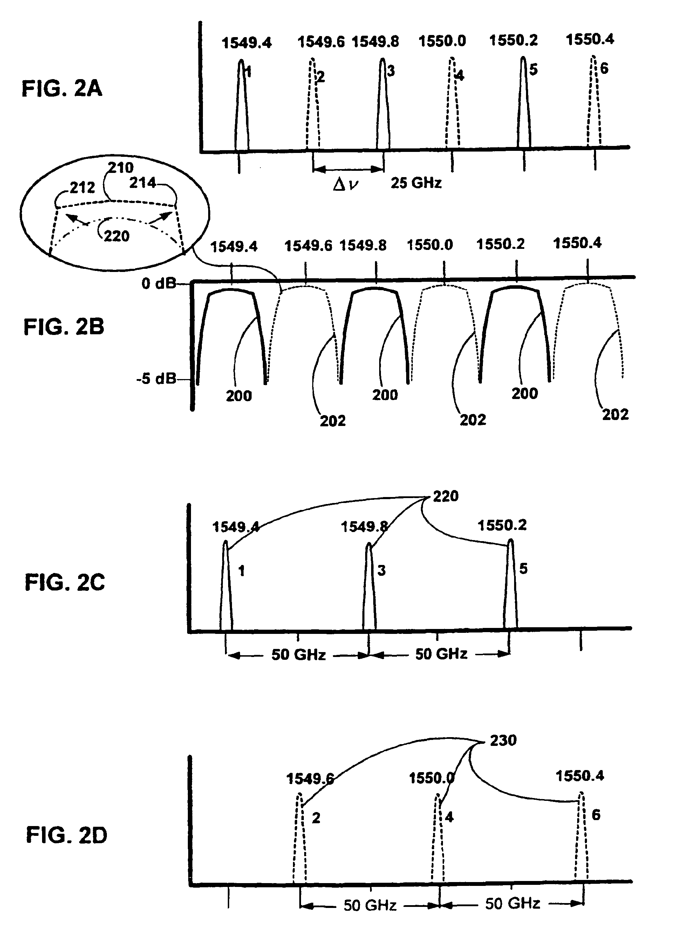

FIGS. 2A-F are signal diagrams showing the passive signal processing accomplished by the periodic optical filters of the current invention.

FIG. 2 A is a graph of amplitude vs. frequency showing the envelope associated with six narrowly spaced, i.e., 25GHz or 0.2nm WDM channels. The odd channels 1, 3 and 5 are shown in solid line. The even channels 2, 4 and 6 are shown in dashed line. Superimposed over each channel is the center wavelength in nanometers.

FIG. 2B is a graph of periodic filter response, in terms of transmission, in decibels vs. frequency. An odd set 200 and an even set 202 of periodic filter transmission characteristics are shown in solid and dashed line, respectively. The optical elements from which these characteristics may be attained are shown in the following figures and accompanying text. The transmission of the filters is periodic with pass bands with a periodicity substantially similar to that of the odd or even channels shown in FIG. 2A, i.e., 50GHz. In enlarged view, the peak transmission characteristics of the filters are shown. A representative even pass band peak is shown with a flat top 210 with distinct edges 212-214 superimposed over a sinusoidal transmission curve. A filter transmission with periodic flat tops is preferred because each channel is subject to shifting around the center frequency and a flat top avoids attenuation of a channel subject to such shifting. Shifting may be caused by any one of a number of factors including temperature, inter-channel interference and polarization mode dispersion.

FIGS. 2CD are graphs which show signal profiles after filtration by the periodic filters of the current invention. The original odd and even channel sets shown in FIG. 2A are separated into odd channels 220 (See FIG. 2C) and even channels 230 (See FIG. 2D). In a multi-stage demux this process of periodic filtration can be applied to subsequent stages until individual channels are obtained. Alternately, de-multiplexing can be achieved by other forms of filtration in subsequent stages since the channel spacing has been doubled from 25 to greater than 50Ghz.

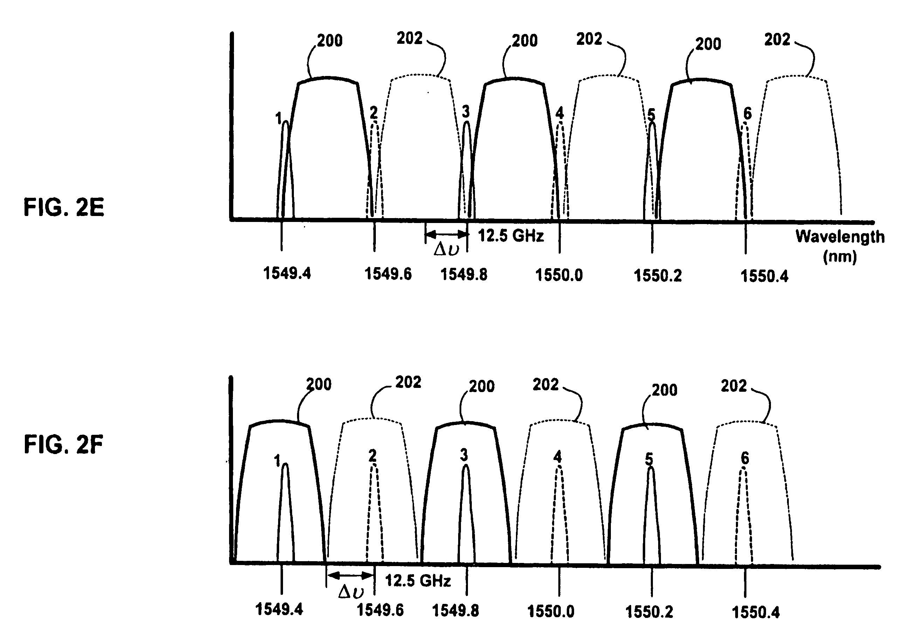

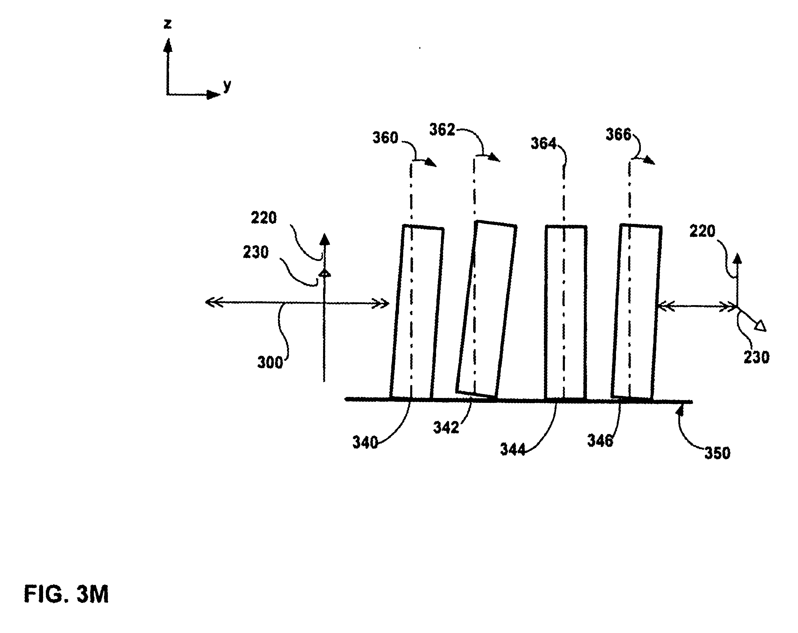

In addition to providing periodic flat top filtration, the periodic filters of the current invention are also easily tuned, as will be shown in FIG. 3M. An un-tuned and tuned periodic filter response is shown in FIGS. 2EF, respectively. Both figures show both odd and even channels superimposed on periodic filter transmission characteristics. In FIG. 2E, the periodic filter is 180 degrees out of alignment with the telecommunications grid. In this instance, the filters uniformly block all channels. FIG. 2F shows the phase relationship between the periodic filter transmission and the channels shifted, as required, so that each channel, odd/even, is centered under a pass band peak.

**Waveplates**

The periodic filters of the current invention may be fabricated from wave plates. When the optic axis of a birefringent crystal is arranged to be substantially parallel with the entrance/exit surfaces of a light beam, the crystal operates as a retarder or wave plate. Light passing through the crystal is separated into ordinary and extraordinary rays, each of which experiences a different index of refraction, $n_o$ and $n_e$, respectively. Since the index of refraction of a material identifies the ratio of the speed of light in a vacuum to that of light in a vacuum, the e- and o-rays are said to travel along fast/slow paths. The relative optical path length difference between the e-wave and the o-wave is expressed in the following Equation 1 as a product of the length L of the crystal and the difference between the indices of refraction for the e- and o-rays.

**Equation I**

$$\Lambda = L\left(|no - ne|\right)$$

The difference in optical path length results in an absolute phase shift between the e-wave and o-wave components of an incident light beam which increases across the length of the crystal The longer the wavelength of light entering the crystal, the greater the thickness of the crystal required to achieve the same overall phase shift.

**Half**

Where the relative optical path length difference corresponds to half that of the incident wavelength or odd integer multiples thereof, the retarder is classified as a half wave plate, as expressed in the following Equation II:

**Equation II**

$$L\left(|no - ne|\right) = \frac{(2m + 1)\lambda o}{2}$$

where m is an integer corresponding to the order of the wavelength $\lambda_0$. Where such a relationship exists, linearly polarized light which enters the plate emerges from the plate with a relative phase shift of $\frac{1}{2}\pi$ and a shift in the direction of the polarization vector, as shown in the following diagram.

After Rotation    $\theta$ | $\theta$    Before Rotation

Slow (fast axis)

**Full**

Where the optical path length corresponds to that of the incident wavelength or integer multiples thereof, the retarder is classified as a full wave plate, as expressed in the following Equation III.

## Equation III

$$L\big(|no - ne|\big) = m\lambda o$$

No rotation of the polarization vector occurs for wavelengths of light at which the plate operates as a full wave plate.

Now a wave plate has a free spectral range (FSR). The free spectral range correlates with the minimum resolvable bandwidth of the wave plate. FSR is defined in the following Equation IV.

## Equation IV

$$FSR\upsilon = \frac{1}{2} x \frac{c}{L\big(|no - ne|\big)}$$

where c is the speed of light in a vacuum. As either the length or the difference in the indices of refraction of the e- and o-rays for a crystal increases, its FSR decreases. If the FSR of the one or more wave plates are set equal to the channel separation between adjacent channels, then odd and even channels can be separated by passing them through such a wave plate or set of wave plates. Each wave plate in the stack will operate as a full wave plate to one of the odd or even channels, and a half wave plate to the other. That set of channels for which the wave plates are half wave plates will exhibit a shift in polarization vector during passage through the wave plate stack. When that shift in polarization vectors of odd and even channels approaches 90 degrees, the separation will be at a maximum.

Where the crystal is Ytrium Vandanate YVO4; $n_o$ = 1.9447 and $n_e$ = 2.1486. Assuming a channel spacing, such as that shown in FIG. 2A of 25 GigaHertz or 0.2 nm, the required length of the crystal would be 28.6 mm. The following table shows the indices of refraction for a range of birefringent materials.

Table I

| 1550 nm | YVO$_4$ | LiNbO$_3$ | KTP | a-BBO | Calcite | Crystal Quartz | Rutile |
|---|---|---|---|---|---|---|---|
| $n_o$ | 1.9447 | 2.21283 | Nx, 1.72949 Ny, 1.73698 | 1064 nm 1.65790 | 1.63361 | 1.52781 | 2.45318 |
| $n_e$ | 2.1486 | 2.1374 | Nz, 1.81584 | 1.58462 | 1.47722 | 1.53630 | 2.7093 |

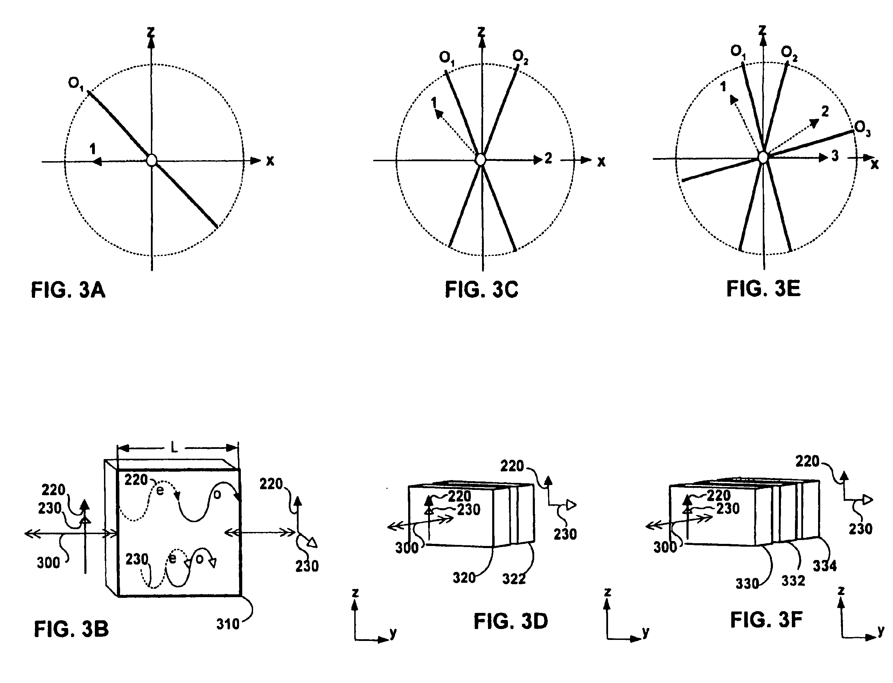

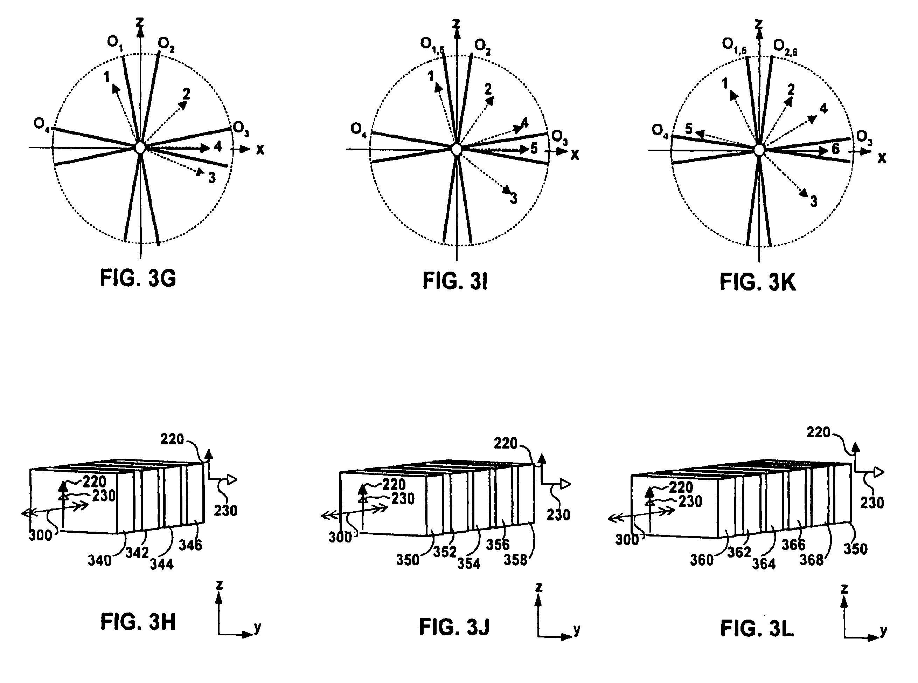

FIGS. 3A, C, E, G, I and K are graphs showing the optical axes and polarization vectors associated with periodic optical filters fabricated from 1, 2, 3, 4, 5 and 6 birefringent crystal stacks shown in isometric views in FIGS. 3B, D, F, H, J and L, respectively. The following Table II shows for each stack the optical axis Oa of each crystal in relation to the initial polarization vector IPv of the odd and even channels 220-230 which are multiplexed on the linearly polarized optical beam 300 which strikes the first crystal 340 of the stack. Additionally, the polarization vector Pv is shown in any successive crystals in the stack is shown. A single crystal 310 is shown in FIG. 3B. Two crystals 320-322 are shown in FIG 3D. Three crystals 330-334 are shown in FIG 3F. Four crystals 340-346 are shown in FIG. 3H. Five crystals 350-358 are shown in FIG. 3J. Six crystals 360-368 are shown in FIG. 3L. The vector Pv is for whichever of the odd or even channel sets experiences each crystal in the stack as a half wave plate is shown. The polarization vector for the other of the channel sets which experiences the stack as a series of full wave plates is not shown, since for that channel set, the initial polarization vector is not rotated as it passes through the stack. Each polarization vector and optical axis is labeled with a subscript indicating the crystal with which it is associated. Note that even where the number of crystals in the stack exceeds four, e.g. FIGS. 3I-L only four optical axis are required to orthogonalize the odd and even channels.

Table II

| | to/Out | 1 | | 2 | | 3 | | 4 | | 5 | | 6 | |
|---|---|---|---|---|---|---|---|---|---|---|---|---|---|
| | IPv | Os | Pv | Oa | Pv | Oa | Pv | Oa | Pv | Oa | Pv | Oa | Pv |
| FIG. 3AB | 0 | 45 | 90 | | | | | | | | | | |
| FIG. 3CD | | 22.5 | 45 | -22.5 | -90 | | | | | | | | |
| FIG. 3EF | 0 | 15 | 30 | -15 | -60 | -75 | -90 | | | | | | |
| FIG. 3GH | | 11.25 | 22.5 | -11.25 | -45 | -78.75 | -112.5 | 78.75 | -90 | | | | |
| FIG. 3IJ | 0 | 9 | 18 | -9 | -36 | -81 | -126 | 81 | -72 | -9 | -90 | | |
| FIG. 3KL | | 7.5 | 15 | -7.5 | -30 | -82.5 | 45 | 82.5 | -60 | 7.5 | 75 | -7.5 | -90 |

The equation for the angle of optical axis of each crystal of a stack of N crystals with FSR substantially equal to the grid or channel spacing is set forth in the following Equation 5.

**Equation V**

$$\Phi n = \left(-1\right)^{n}\left[\frac{\pi}{4}\times\left\{\left(n+\frac{1+3\times\left(\left(-1\right)^{n}\right)}{2}\right)-\frac{2i+1}{N}\right\}\right]$$

Where $\Phi l$ is the angular orientation of the optical axis of the first crystal in the stack with respect to the vertical, "Z" axis. Where N is the total number of crystals in the stack. Where i is an integer including zero. Where n is the crystal number in the stack with n=1 corresponding to the first crystal in the stack and **n = N** corresponding to the last crystal in the stack.

The output polarization angle $\theta n$ of the channel(s) for which the crystal acts as a half wave plate may be expressed as a function of the optical axis of the $n_{th}$ crystal $\Phi n$ and the output polarization angle of the prior crystal $\theta(n - 1)$ as expressed in the following Equation 6.

**Equation VI**

$$\theta n = \Phi n + \left(\Phi n - \theta(n-1)\right) = 2\Phi n - \theta(n-1)$$

Where the stack is composed of an even number of crystals, the incident polarization angle of the incoming light beam on the first crystal of the stack may be arbitrarily chosen, although 0° is preferred. Where the stack is composed of an odd number of crystals, the incident polarization angle should be 0°, 90°, 180°, or 270°, with respect to the vertical.

As the crystal number increases, the flat top transmission characteristic of the stack becomes more pronounced. For N = 1, the response is sinusoidal.

Relatively few crystals are required in the stack to achieve a flat top transmission characteristic. This results from the fact that the transfer function from which these geometric relationships were derived combines a triangle wave and a flat top, as opposed to a rectangular wave. The former requires fewer terms to generate than the latter and thus fewer crystals. This is advantageous since it reduces the complexity, cost, and form factor of the resultant multiplexer. See S.E. Harris et al., Optical Network Synthesis Using Birefringent Crystals JOURNAL OF THE OPTICAL SOCIETY OF AMERICA, VOLUME 54, Number 10, October 1964 for a general discussion of transfer functions related to birefringent crystals, which is hereby incorporated by reference as if fully set forth herein.

FIG. 3M is an enlarged side elevation view of a periodic filter fabricated from four crystals 340-350 as shown in FIG. 3H. Filters with the required periodicity may not also exhibit the proper phase relationship between the center of their pass bands and the gridlines of the telecommunications or other grid on which individual channels are centered. Therefore, it may be necessary to tune each individual crystal so that its pass bands are aligned with the ITU or other grid, as shown in FIGS. 2E-F. This may be achieved by tilting each crystal on either the fast or slow axis by an amount necessary to produce the required phase shift. Thus, crystal 340 is tilted by an angle 360, crystal 342 is tilted by an angle 362, crystal 364 requires no tilting, and crystal 346 is tilted by an angle 366.

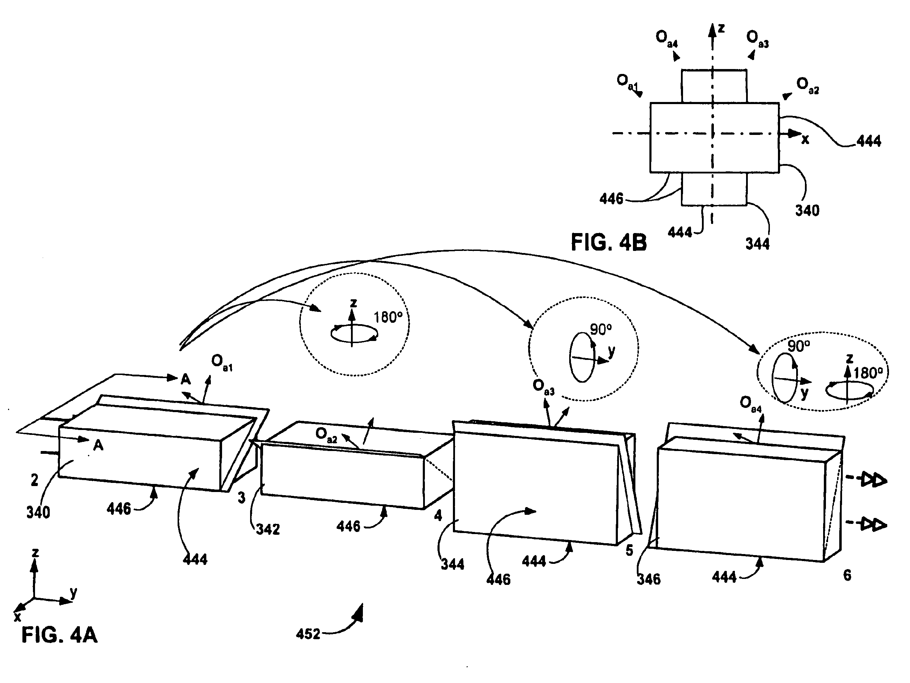

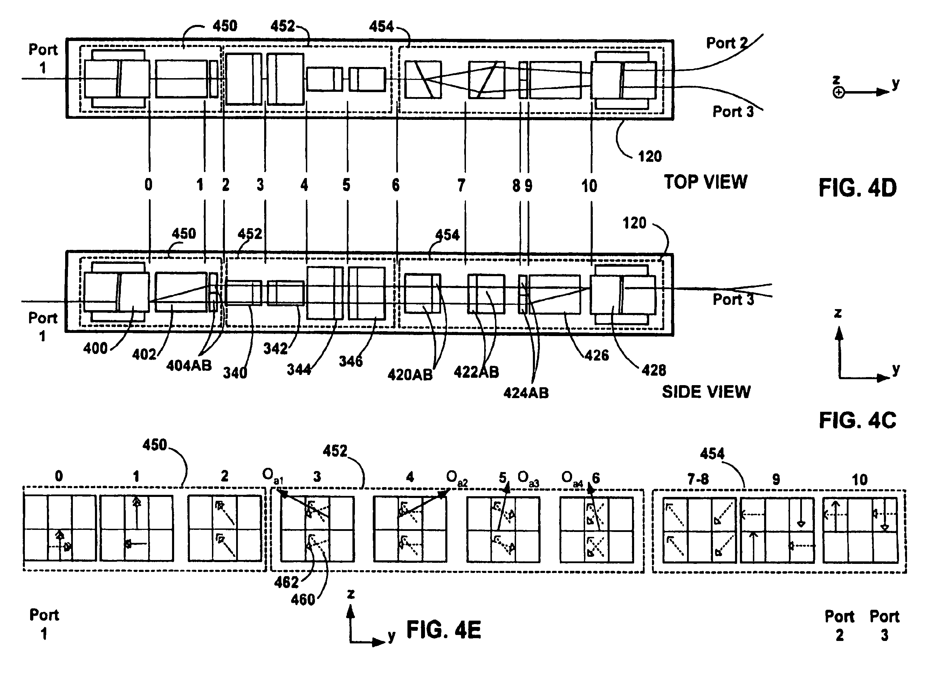

FIGS. 4AB show an isometric side view and an end view of a periodic optical filter stack 452 fabricated from four discrete orthogonal orientations of a crystal with a fixed geometric relationship between its optic axis and each of its sides. Specifically, the optic axis is aligned at an angle of +/-11.25 degrees with respect to an internal normal to side 444, depending on which end the light beam is entering. Since the adjacent side 446 is orthogonal to side 444, the optic axis is aligned at +/-78.75 with respect to the internal normal to this side. These are precisely the angles called for in Equation 5 and shown in Table II. Thus, a stack of wave plates can be constructed from a single crystal mounted to a frame on either of two sides. In the example shown, crystal 340 may be mounted on side 446. Crystal 342 may be mounted on that same side, i.e., side 446, provided the crystal is rotated end-to-end 180 degrees around the z-axis to flip the angle of the optic axis with respect to the z-axis. The crystal 344 may be rotated 90 degrees around the y-axis and mounted on side 444. Crystal 346 may be mounted on that same side, i.e., side 444, provided the crystal is rotated end-to-end 180 degrees around the z-axis to flip the angle of the optic axis with respect to the z-axis. These relationships are shown in FIG. 4A.

As is evident from Equation 5 and Table II, as the number of crystals in the stack increases, the geometric orientations of the optic axis do not exceed four and those four may be obtained by the simple geometry set forth above. This allows all crystals to be side mounted on only one of two sides. Where $\Phi 1$ is the angular orientation of the optical axis of the first crystal in the stack with respect to the z-axis; the optic axis of the second crystal will be at an angle $-\Phi 1$ with respect to the z-axis; the third crystal at $\Phi 1$ with respect to the x-axis; and the fourth at $-\Phi 1$ with respect to the x axis. For the fifth crystal and higher the relationship repeats itself. This relationship may alternately be expressed as follows where again $\Phi 1$ is the angular orientation of the optical axis of the first crystal in the stack with respect to the z-axis.

$$\text{Crystal \#1} \qquad \Phi_1$$

$$\text{Crystal \#2} \qquad \Phi_2 = -\Phi_1$$

$$\text{Crystal \#3} \qquad \Phi_3 = -(90° - \Phi_1)$$

$$\text{Crystal \#4} \qquad \Phi_4 = (90° - \Phi_1)$$

$$\text{Crystal \#5} \qquad \Phi_1 \text{ ...and so forth.}$$

This relationship is shown in FIG. 4B.

FIGS. 4CD show top and side elevation views of the periodic optical filter shown in FIGS. 4AB with a linear polarizer interface 450 to port 1, a periodic optical filter stack 452, and a beam displacer/combiner interface 454 to optical ports 2-3. The linear polarizer couples to the first port to linearly polarize arbitrarily polarized incoming light. The beam displacer/combiner interface displaces and combines orthogonally polarized odd and even channel components of an optical beam depending on the propagation direction of the light beam. The linear polarizer includes, in this embodiment of the invention, a lens 400, a polarization beam splitter/combiner 402 and polarization rotators 404AB. The lens focuses or collimates light depending on propagation direction of light. The polarization beam splitter combiner splits an arbitrarily polarized optical beam into component beams with orthogonal polarization vectors and combines two component beams with orthogonal polarization vectors into the optical beam depending on the propagation direction. The polarization rotators rotate component beams with orthogonal polarization vectors into linear alignment and rotate linearly aligned polarization vectors into orthogonal polarization vectors depending on the propagation direction. The periodic optical filter stack 452 includes birefringent crystals 340-346. The beam displacer/combiner interface includes a first beam angle turner 420AB, a second beam angle turner 422AB, a polarization rotator 424AB, a polarization beam splitter/combiner 426, and a lens 428. The beam angle turners turn the odd and even channel components of an optical beam through an angle such that the path of the odd and even channel components converge or diverge, depending upon the polarization direction of the odd and even channel components and the propagation direction. The polarization rotator rotates linearly aligned polarization vectors of the odd and even channel components into orthogonal polarization vectors and rotates odd and even channel components with orthogonal polarization vectors into linear alignment depending on the propagation direction. The polarization beam splitter/combiner combines separate odd and even channel components with orthogonal polarization vectors into the optical beam and splits an arbitrarily polarized optical beam into component beams with orthogonal polarization vectors depending on the propagation direction.

FIG. 4E shows polarization diagrams of light rays at various stages of the mux/demux shown in FIGS. 4CD. One of the odd/even channel components is shown with an open arrowhead while the other is shown with a closed arrowhead. The stages are numbered from 0-10 and correlate with sequential locations shown in FIGS. 4CD. In the following discussion, the operation of the mux/demux in the de-multiplexer mode is discussed. In this mode, light with component odd and even channels enters from port 1 and exits via ports 2 and 3 as separate component beams, one with substantially odd channels and the other with substantially even channels. The device may also perform as a multiplexer by simply reversing the direction of propagation of light. Thus, odd channels on one of ports 2-3 and even channels on the other of the ports 2-3 may be introduced to the device, whereupon interlaced odd and even channels will exit the device and enter port 1.

Polarization diagram "0" shows an arbitrarily polarized beam from port 1 which has been collimated by lens 400. Lens 400 serves to collimate the incoming light containing all channels, odd and even. In an embodiment of the invention a Gradient Index of Refraction Lens (GRIN) lens may be utilized. Next, light is passed through the polarization beam splitter/combiner 402. This element splits the arbitrarily polarized optical beam into component beams with orthogonal polarization vectors, as shown in polarization diagram "1". In an embodiment of the invention a birefringent crystal may be utilized. Subsequently, the two orthogonal polarization vectors are rotated into alignment by polarization rotator(s) 404AB, as shown in polarization diagram "2". In an embodiment of the invention a relatively thin, i.e., broadband, half wave plate which rotates both odd and even channels may be utilized. The two rays which form the output of the linear polarizer 450 contain both the odd and even channel components. Additionally, since they are derived from mutually orthogonal polarization vectors of the incoming light from port one, they collectively contain substantially all the power present in the original beam.

These discrete rays are passed to one end of the periodic filter stack 452. That end shall be identified as first I/O interface of the periodic filter stack. As shown in polarization diagrams 3-6, each successive crystal in the stack serves as a half plate to one of the odd and even channels in each of the two rays and as a whole wave plate to the other. The geometry of the optical axis of each crystal is such that the rays exit the opposite end of the stack, the second I/O interface, with orthogonally polarized odd and even channel components for each ray. This state is shown in polarization diagram "6".

Next, both rays are directed into the beam displacer/combiner and specifically to a pair of beam angle turners 420AB, 422AB. These elements turn the odd and even channel components through an angle thereby diverging/separating the odd and even components of each ray, as is shown in polarization diagram 7-8. In an embodiment of the invention these elements include birefrigent prism pairs (modified Woltson prisms). Then the components of each ray are passed through the polarization rotator(s) 422AB which orthogonalize the odd and even channel components of each ray. This state is shown in polarization diagram "9". Suitable elements for this function include the broadband half wave plate(s) discussed above. Then the rays and components are passed through the polarization beam splitter/combiner where the orthogonally polarized odd and even channel components are combined with their counterparts to form component beams entering ports 2-3 via GRIN lens 428.

The operation of the device may be reversed to perform as a multiplexer. Thus, mux/demux may perform as a multiplexer, as a de-multiplexer, or as a combined multiplexer/de-multiplexer.

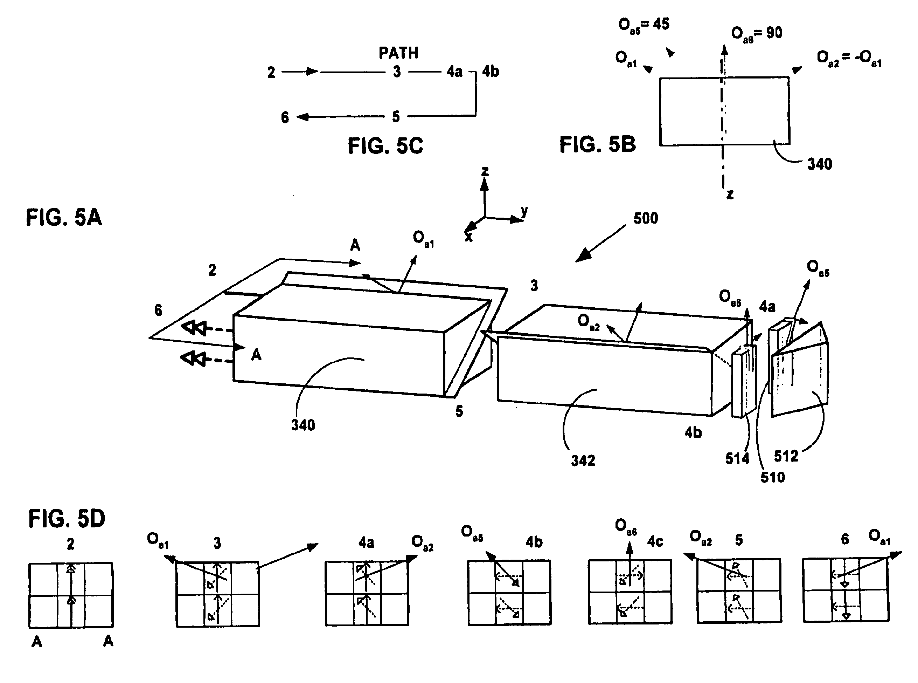

FIGS. 5AB are isometric side and end views of a periodic filter set 500 which uses a folded propagation path through a 2 wave plate stack to achieve optical filtration equivalent to that associated with a 4 wave plate stack 452 (see FIG. 4AE), and with a reduced form factor. The odd and even periodic filter bandpasses have flat tops substantially as pronounced as may be achieved with 4 discrete crystals. Crystals 340 and 342 are shown. A retroreflector 512 is optically coupled to the end of crystal 342 to create a return path through the stack shown in FIG. 5C. Two broadband half wave plates 510,514 are sandwiched between the retroreflector and the wave plate 342 to rotate the odd and even components by an appropriate amount so as to align them properly with the optical axis of wave plate 342 for the return path through that wave plate. The optical axis of wave plate 510 is aligned at 45 degrees to the vertical "z" axis in the z-y plane. The optical axis of wave plate 514 is aligned with the vertical "z" axis in the z-y plane.

FIG. 5D is a set of polarization diagrams of light rays at various stages of the periodic filter shown in FIGS. 5AB. Light enters the stack with two rays, each of which has odd and even components as shown in polarization diagram "2". Those rays enter at the first I/O interface on one end of wave plate 340. On the same end of the wave plate, a second I/O interface is formed where the component beams with orthogonal odd and even polarization vectors exit the stack.

The embodiment shown in FIGS. 5AD may be combined with the linear polarizer 450 and the polarization beam displacer/combiner 454 (See FIGS. 4CE).

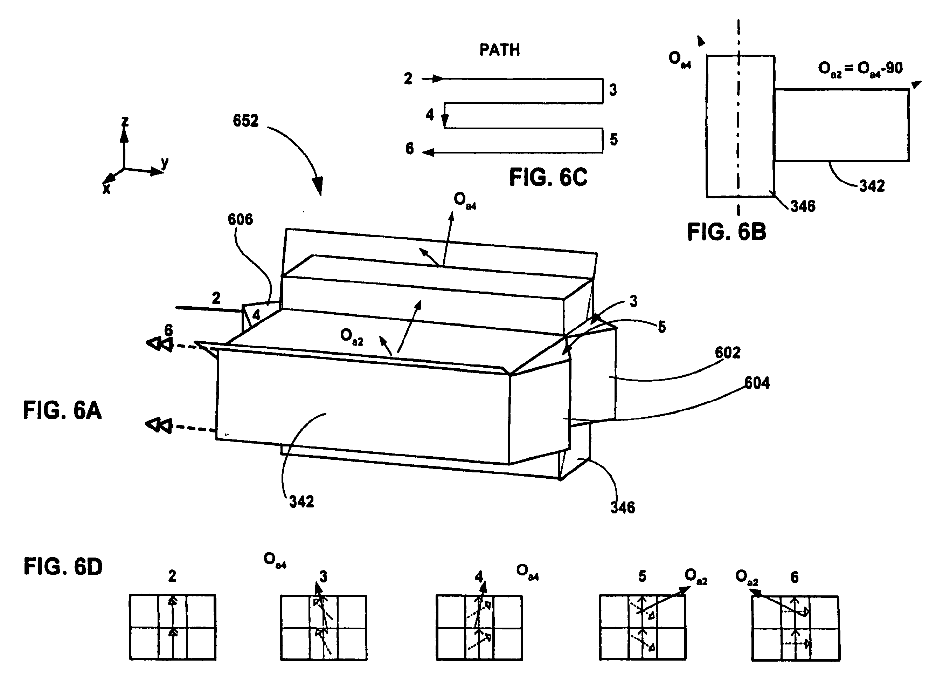

FIG. 6AB are isometric side and end views of a periodic filter set 652 with an alternate side-by-side embodiment to the 2 wave plate stack with folded beam path shown in FIG. 5AB. Optical filtration equivalent to that associated with a 4 wave plate stack 452 (see FIG. 4AE) is achieved and with a reduced form factor. Wave plates 342 and 346 are shown. Three retroreflectors 602-606 bend light rays on the path shown in FIG. 6C, with the light passing twice through each wave plate. Retroreflector 602 bends the rays back through wave plate 346. Retroreflector 606 bends the rays from wave plate 346 onto a return path through wave plate 342. Retroreflector 604 bends the rays back through wave plate 342.

FIG. 6D is a polarization diagram set 2-6 of light rays at various stages of the periodic filter shown in FIGS. 6AB. Light which enters with both components, odd and even, linearly polarized, exits with two component beams one with the odd channels and the other with the even.

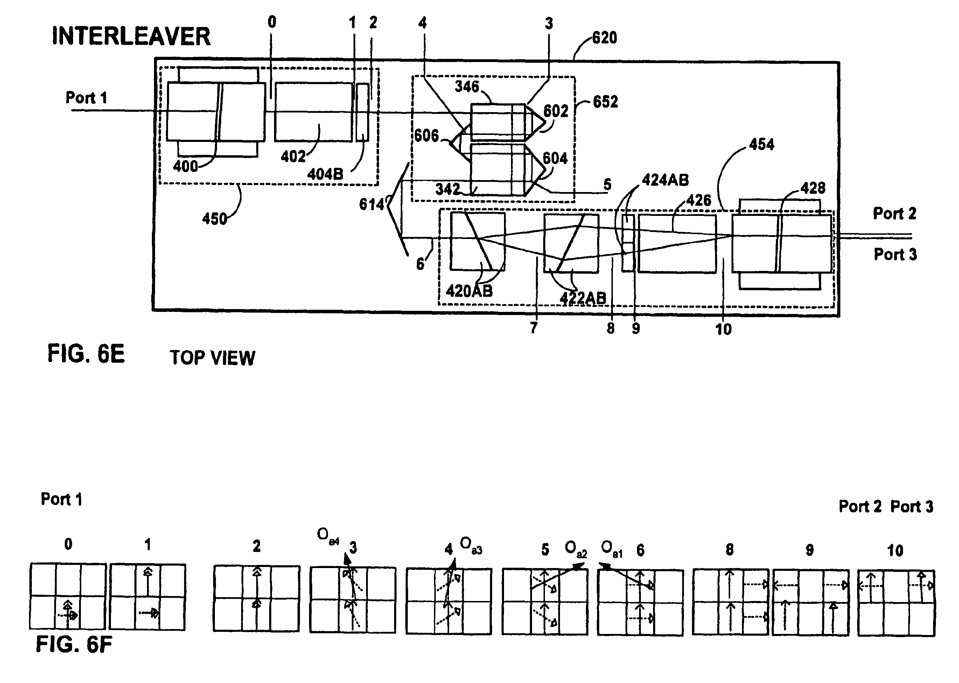

FIG. 6E is a top elevation view of the periodic optical filter stack 652 with a folded propagation path shown in FIGS. 6AB with interfaces to optical ports for multiplexing or de-multiplexing optical signals. The linear polarization interface 450 is shown coupled to the first I/O interface of the stack 652, while the beam displacer/combiner 454 is coupled to the second I/O interface of the stack 652 via a retroreflector 614.

FIG. 6F shows polarization diagrams of light rays at various stages of the mux/demux shown in FIGS. 6E.

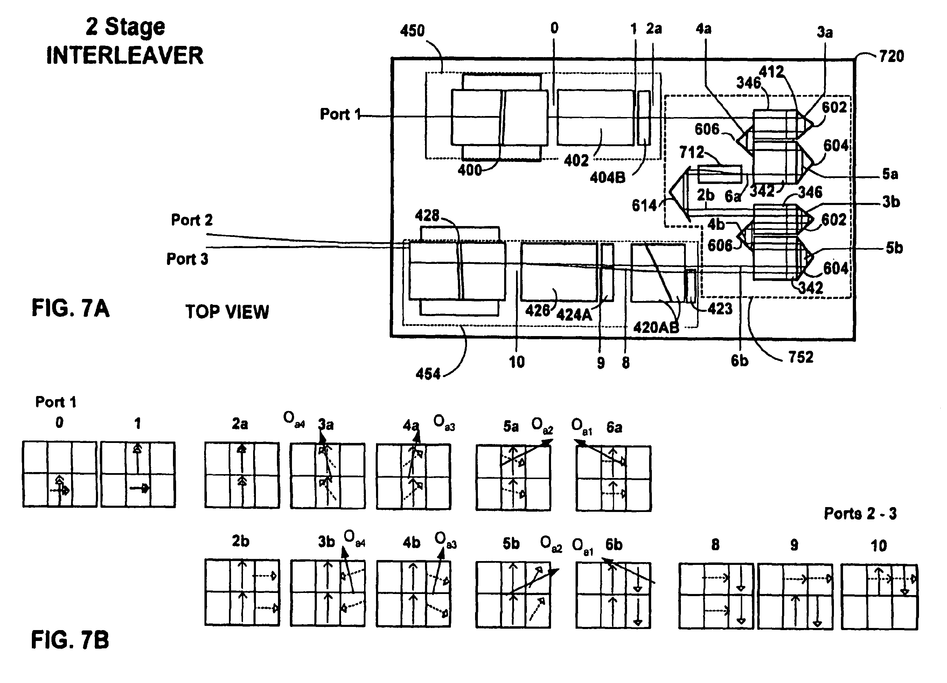

FIG. 7A is a top plan view of a mux/demux 720 which is an alternate embodiment of the mux/demux shown in FIG. 6E. The optical stack 752 uses two wave plate stacks each with folded propagation paths. Each is similar to that shown in FIGS. 6A and 6E. This staging increases isolation between odd and even channels. FIG. 7B shows polarization diagrams of light rays at various stages of the mux/demux shown in FIG. 7A. Light from port 1 is passed through linear polarizer 450 to the first I/O interface of the side-by-side stack composed of wave plates 342,346. Upon exiting this stack at the location referenced "6a" (See polarization diagram 6a), the odd and even components of each of the two rays have been orthogonalized. Next they pass through a beam splitter/combiner 712, e.g., a birefringent crystal oriented to walk off e- and o-rays. Then the component beams, which are now separate and orthogonal, are directed by retroreflector 614 back into the second stage of periodic filtering performed again by a second set of wave plates 342,346.

At interface 2b shown in polarization diagram "2b", odd channels are horizontally polarized with a small amount of even channel signals still remaining. During propagation through the second stage of periodic filters, the polarization direction of one of the odd/even channels will be rotated while the other of the odd/even channels will not be affected. This further improves isolation and reduces cross talk between channels. Light exits the second stage at the second I/O interface labeled 6b (See polarization diagram "6b") with odd and even components of both rays separated and linearly polarized. Those rays pass to beam displacer/combiner 454 for passage to ports 2-3. Since the component rays have already been separated by splitter/combiner 712, only a single beam bender 420A/B is required to orthogonally polarize the components of each ray. A polarization rotator 423 serves to rotate one pair of the component beams prior to entering the beam bender.

The end result of the above-discussed arrangement is improved channel isolation with reduced cross talk. As with all the embodiments discussed above, the operation of this embodiment as well may be reversed to serve as either a multiplexer, a de-multiplexer or a combined mux/demux.

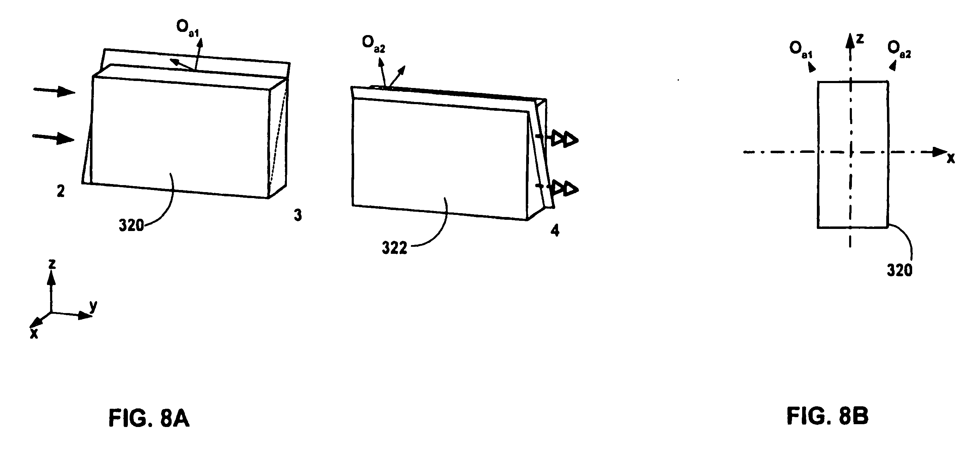

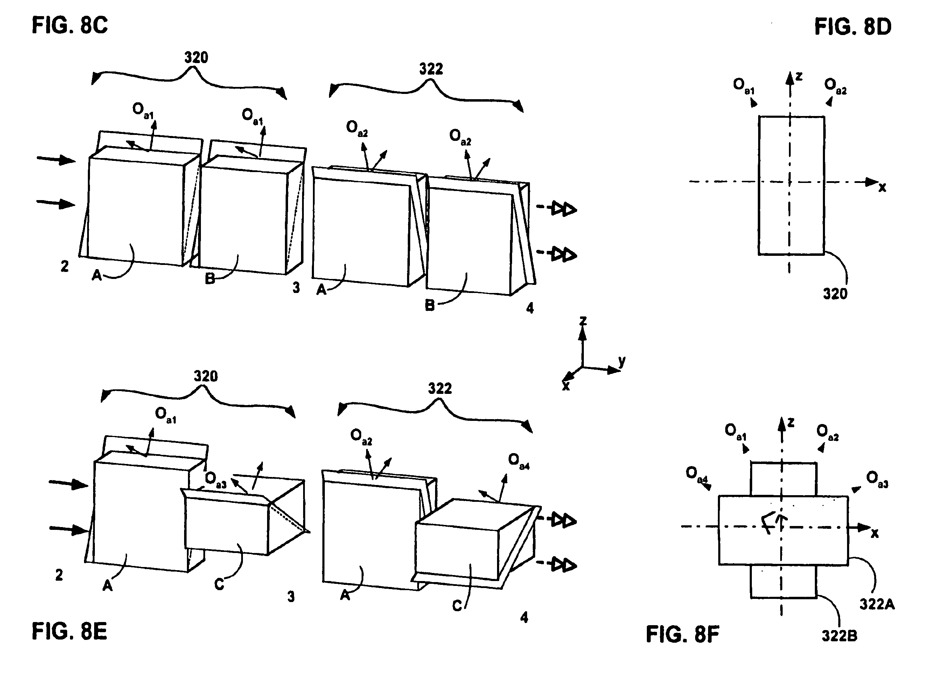

FIGS. 8AB are isometric side views and an end view respectively of a periodic optical filter comprising two wave plates 320-322. The FSR of each wave plate is substantially equal to the channel spacing in the selected wavelength grid, e.g., the ITU grid shown in FIG. 2. The optical axis of wave plates 320-322 are aligned at +22.5 degrees and -22.5 degrees with respect to the vertical "z" axis, as discussed above in connection with Equation V and Table II. Once the stack is tuned into alignment with the selected grid, linearly polarized light with interlaced odd and even channel components is converted to orthogonally polarized light with periodic odd and even components substantially separated onto separate ones of the orthogonal polarization vectors. This state is not temperature invariant.

**Thermal Stabilization**

Temperature variations in a mux/demux may result from the environment or from the power transmitted through the device. The center wavelengths of each periodic pass band slip with temperature, in the case of YVO4, it is about 35 pm/˚C. This can result in the periodic odd and even pass bands of the periodic filter stack moving out of alignment with the selected grid, e.g., the ITU grid. This misalignment results in attenuation of signal strength, cross talk and ultimately loss of transmission/reception capability until the stack returns to its original temperature.

One solution is to actively stabilize the temperature of the multiplexer/de-multiplexer using a heater or cooler and a closed loop feedback of temperature or wavelength. This solution is expensive and increases the form factor of the mux/demux.

Another solution is to passively thermally stabilize each wave plate. In order to achieve this result in the broadband wave plate stacks of the current invention, it is necessary that both of the following conditions be satisfied.

Each wave plate must continue to serve as a ½ wave plate to one of the odd and the even channels and a whole wave plate to the other of the odd and even channels during temperature variations. This requirement is fulfilled when the first derivative of FSR with respect to temperature is substantially zero. One convenient way of achieving this result is to fabricate each wave plate from at least a pair of dissimilar birefringent materials which collectively serve as ½ and whole wave plates to the odd and even channels.

FIGS. 8CD are isometric side and end views of an alternate embodiment of the invention showing a periodic optical filter comprising two wave plates, each of which incorporates passive thermal compensation. In FIG. 8C two wave plates 320-322 are shown. Wave plate 320 is fabricated from a first pair of crystals 320A, the primary crystal and 320B the compensating crystal. The collective FSR of the crystal pair is substantially equal to the spacing between channels in the selected wavelength grid. Those crystals have substantially identically oriented optical axis at 22.5 degrees with respect to the vertical or "z" axis as set forth above in connection with Equation V and Table II and as shown in FIG. 8D. The second wave plate 322 is fabricated from a second pair of crystals 322A, the primary crystal and 322B the compensating crystal. The collective FSR of this crystal pair as well is substantially equal to the spacing between channels in the selected wavelength grid. These crystals have substantially identically oriented optical axis at - 22.5 degrees with respect to the vertical or "z" axis, as set forth above in connection with Equation V and Table II and as shown in FIG. 8D. The compensating crystals of each wave plate compensate the primary crystal by providing a temperature related variation in their optical path length difference between e and o rays which offset the temperature related variation in the optical path length difference in the primary crystal. As shown in Table III the geometric orientation shown in FIG. 8C with the optical axis of the primary and compensating crystal members of each wave plate aligned is appropriate, only if the crystal pairs exhibit offsetting optical path length differences as a function of temperature in that orientation. Compensating materials for YVO4 for which parallel alignment of optical axis of the primary and compensating crystals are appropriate are shown in row 12 of Table 4 without highlighting. These include: $LiNbO_3$, KTP or Calcite. The remaining materials shown in Table 4, i.e. a-BBO, Crystalline Quartz and Rutile can also be used to compensate YVO4 but a different geometry of the optical axis of the primary and compensating crystals is called for. That geometry is shown in FIGS. 8EF.

FIGS. 8EF are isometric side and end views of an alternate embodiment of the invention showing a periodic optical filter comprising two wave plates each of which incorporates passive thermal compensation. In FIG. 8E two wave plates 320-322 are shown. Wave plate 320 is fabricated from the primary crystal 320A and the compensating crystal 320C. The collective FSR of the crystal pair is substantially equal to the spacing between channels in the selected wavelength grid. Unlike the arrangement shown in FIG. 8C, the optical axes of this pair are orthogonal to each other. The optical axis of the primary crystal 320A remains at 22.5 degrees with respect to the vertical or "z" axis while the optical axis of the compensating crystal 320C is oriented at 112.5 or -67.5 degrees with respect to the "z" axis. The second wave plate 322 is fabricated from a second pair of crystals 322A, the primary crystal and 322B the compensating crystal. The collective FSR of this crystal pair as well is substantially equal to the spacing between channels in the selected wavelength grid. These crystals 322AC as well have orthogonal optical axis at - 22.5 degrees and 67.5 degrees with respect to the vertical or "z" axis. The remaining materials shown in Table 4, i.e. a-BBO, Crystalline Quartz and Rutile can be used to compensate $YVO_4$ in this orthogonal orientation of optical axis of the primary and compensating crystals. This geometry reverses the sign of the optical path length difference of the compensating crystal so as to offset the change in the optical path length of the primary crystal as a function of temperature.

The thermally stabilized embodiments of the periodic optical filters shown in FIGS. 8CF may be combined with the linear polarizer 450 and the polarization beam displacer/combiner 454 (See FIGS. 4CE) to form a mux/demux, in accordance with the current invention.

It is not necessary to practice the invention that all the wave plates in a stack be fabricated from identical pairs of dissimilar materials. In still other embodiments of the invention, the first wave plate might have different compensating crystals or even different primary, as well as compensating crystals. Thus the stack might exhibit for one wave plate optical axis alignment for the primary and compensating crystals, and orthogonalized optical axis for the primary and compensating crystals of another wave plate in the stack.

The geometric orientation of the optic axis of each crystal may be arranged so that both the primary and compensating crystals of a stack with N wave plates may be mounted on either of two sides of each crystal, thus maintaining the simple geometry discussed above in connection with FIGS. 4AB. The primary and compensating crystals may be spaced apart by a gap or may contact one another without departing from the scope of the claimed invention.

Once the stacks shown in FIGS. 8CD and 8EF are tuned into alignment with the selected grid, linearly polarized light with interlaced odd and even channel components is converted to orthogonally polarized light with periodic odd and even components substantially separated onto separate ones of the orthogonal polarization vectors. Tuning, as discussed above, is accomplished by tilting either/both the primary and compensating crystals of the stack.

### Dimensioning of the primary and compensating Crystals:

The wave plates 320 and 322 must each be fabricated from dissimilar birefringent materials dimensioned so as to serve collectively as ½ and whole wave plates to the odd and even channels. The free spectral range of each of these pairs of primary and compensating birefringent materials is expressed in the following Equation VII:

### Equation VII

$$FSR = \left(\frac{1}{2}\right)\left(\frac{c}{|\Delta n_1 L_1 \pm \Delta n_2 L_2|}\right) = \left(\frac{1}{2}\right)\left(\frac{c}{|((n_{e1} - n_{o1})L_1 \pm (n_{e2} - n_{o2})L_2)|}\right)$$

where L is the length of material. The subscripts 1 and 2 denote the primary and compensating birefringent materials respectively.

Now, the condition to be satisfied is that the FSR be a constant equal to the channel spacing, e.g., 100 GHz, and that d(FSR)/dT equal substantially zero. This latter condition is satisfied when the derivative of the denominator equals zero as set forth in the following Equation VIII:

### Equation VIII

$$\frac{d(\Delta n_1 L_1 \pm \Delta n_2 L_2)}{dT} = L_1 \frac{d\Delta n_1}{dT} + L_1 \alpha_1 \Delta n_1 \pm \left(L_2 \frac{d\Delta n_2}{dT} + L_2 \alpha_2 \cdot \Delta n_2\right) = 0$$

where $\alpha$ is the thermal expansion coefficient of either the primary or compensating birefringent crystal as denoted by the subscripts 1 and 2 respectively. Any dissimilar birefringent materials can be utilized. With the two equations, VII and VIII, the two unknowns, L1 the length of the primary birefringent crystal and L2 the length of the compensating birefringent crystal can be determined. Both monoaxial and biaxial birefringents may be used to construct thermally stabilized wave plates. Some of the many suitable birefringent materials and their relevant parameters are shown in the following Table III.

Table III

| 1 | @1550 nm | YVO$_4$ | LiNbO$_3$ | KTP | a-BBO* | Calcite | Crystal Quartz | Rutile |
|---|---|---|---|---|---|---|---|---|
| 2 | $n_o$ | 1.94 | 2.21 | $n_x$, 1.72 $n_y$, 1.73 | 1.65 | 1.63 | 1.52 | 2.45 |
| 3 | $n_e$ | 2.14 | 2.13 | $n_z$, 1.81 | 1.58 | 1.47 | 1.53 | 2.70 |
| 4 | $\frac{dn_o}{dT}$ x10$^{-6}$ | 8.50 | 4.12 | 6.10 8.30 | (-9.30) | 2.10 | (-5.50) | (-43.60) |

(continued)

| 1 | @1550 nm | YVO$_4$ | LiNbO$_3$ | KTP | a-BBO* | Calcite | Crystal Quartz | Rutile |
|---|---|---|---|---|---|---|---|---|
| 5 | $\dfrac{dn_e}{dT}$ x10$^{-6}$ | 3.00 | 35.08 | 14.50 | (-16.60) | 11.85 | (-6.50) | (-86.00) |
| 7 | $\alpha \times 10^{-6}$ | 4.43 | 14.40 | 0.60 | 4.00 | 26.31 | 13.37 | 7.44 |
| 9 | Primary =YVO$_4$ L(mm) @100 GHz FSR | 7.79 | 5.98 xz 5.73 yz | 6.04 | 19.66 | 9.38 | 8.58 |
| 10 | Compensator L(mm) @100 GHz FSR | 1.20 | 3.25 xz 4.21 yz | 3.66 | 16.03 | 48.66 | 0.97 |
| 11 | Primary Axis | o<>e | o<>e | o<>e | o<>e | o<>e | o<>e |
| | Compensator axis | o<>e | o<>e | e<>o | o<>e | e<>o | e<>o |

For each material its refractive index at 1550 nm on the o and e axis are set forth in rows 2-3 respectively. The change in refractive index as a function of temperature for the o- and e-axis is set forth in rows 4-5. Row 7 sets forth the coefficient of thermal expansion for the material. The parameters for a-BBO are approximate since measured at 1064nm. Rows 9 and 10 show calculated lengths for the primary and compensating birefringent crystals of a wave plate with a FSR of 100 GHz. Any birefringent materials can be used to compensate, provided only that the optical axis of the primary and compensator are either aligned with one another or orthogonal to one another as shown in row 11.

If we choose for the primary material YV0$_4$ and for the compensating material crystalline Quartz and a FSR for the pair of 100 GHz and substitute the corresponding parameters from Table III into Equation VII we have:

**Equation VIIa**

$$100Ghz = \left(\frac{1}{2}\right)\left(\frac{3x10^8 \, _{m/s}}{(0.2L_1 + 0.0085L_2)}\right)$$

A similar substitution of values from table III into Equation VIII results in the following equality:

**Equation VIIIa**

$$L_1(3.0-8.5)x10^{-6} + L_1(4.43x10^{-6})(2.14-1.94) - L_2(-6.5+5.5)x10^{-6} - L_2(13.37x10^{-6})(1.53-1.52)=0$$

which reduces to $L_1 = 0.19 L_2$. Then, substituting back into equation VIIa a yields:

$$100x10^9 \, \tfrac{cycle}{s} = \left(\frac{1}{2}\right)\left(\frac{3x10^8 \, _{m/s}}{(0.2(0.19L_2)+0.0085L_2)}\right) = \frac{3x10^8 \, _{m/s}}{0.062L_2}$$

Therefore L2 = 48.66 mm and L 1 = 9.38 mm and the optical axis are orthogonal to one another as shown in FIGS. 8EF.

As discussed above, two dissimilar birefringent crystals can be used to compensate the retardation of each of the waveplates. In an alternate embodiment of the invention, compensation of the linear drifting is not enough and high order compensation must be considered by use of 3 or more crystals with appropriate dimensioning to compensate the retardation of each of the waveplates.

In the example given below three dissimilar crystals are used to compensate the temperature drift of the retardation of a waveplate to the second order. Let $\phi$ denote the total retardation of the waveplate, and using Taylor expansion, the following equations must be satisfied:

**Equation IX**

$$FSR = \frac{c}{2 \cdot \sum_{i=1}^{n} (\pm \Delta n_i \cdot L_i)}$$

**Equation X**

$$\frac{d\phi}{dT} = \sum_{i=1}^{n} (\pm \frac{dY_i}{dT} \cdot L_i) = 0$$

**Equation XI**

$$\frac{d^2\phi}{dT^2} = \sum_{i=1}^{n} (\pm \frac{d^2\overline{Y}_i}{dT^2} \cdot L_i) = 0$$

where $i$ is denotes the $i$th birefringent crystal, and $\Delta n_i = n_{ei} - n_{oi}$ Equations X and XI may be expressed as follows:

**Equation Xa**

$$\frac{dY_i}{dT} = \frac{d\Delta n_i}{dT} + \alpha_i \cdot \Delta n_i$$

**Equation XIa**

$$\frac{d^2\overline{Y}_i}{dT^2} = \frac{d^2\Delta n_i}{dT^2} + 2\alpha_i \cdot \frac{d\Delta n_i}{dT} + \Delta n_i \cdot \frac{d\alpha_i}{dT} + \alpha_i^2 \cdot \Delta n_i.$$

The values of $\dfrac{dY_i}{dT}$ and $\dfrac{d^2\overline{Y}_i}{dT^2}$ may be obtained experimentally by measuring each and every item on the right of equations Xa and XIa. Using these values, we can solve the equations IX, X, XI to find the right length for each of the composing birefringent crystals. Since there are only 3 equations to be satisfied if we use more than three crystals, there would be no unique solution. As discussed above there are numerous suitable birefringent crystals including: $YVO_4$, KTP, $LiNbO_3$, a-BBO, Calcite, Crystal Quartz, Rutile and etc. with the parameters listed in table III.

As an example, if we choose $YVO_4$, KTP and $LiNbO_3$ crystals, with the crystals oriented in the following manner: the $n_e$ axis of $YVO_4$ is aligned with the axis of $n_z$ of KTP and $n_o$ axis of $LiNbO_3$; the $n_o$ axis of $YVO_4$ is aligned with the axis of $n_x$ of KTP (in one case) and $n_e$ axis of $LiNbO_3$. All the axis mentioned are in plane that is perpendicular to the light beam. The measured values and solutions of the equation are both listed in Table IV.

**Table IV**

| Crystal | YVO$_4$ | KTP | LiNbO$_3$ |
|---|---|---|---|
| $$\dfrac{dY_i}{dT} \; x10^{-6}$$ | 4.613 | -8.454 xz  -6.248 yz | -29.808 |
| $$\dfrac{d^2\overline{Y}_i}{dT^2} \; x10^{-9}$$ | 2.76 | -23.58 | -117.8 |
| Length (mm) | 4.113 | 6.464 xz | 1.197 |
| Length (mm) | 0.989 | 13.584 yz | 2.694 |

Thus three crystals can compensated the temperature phase retardation to second order effect. In still other embodiments of the invention higher orders of precision in the passive thermal compensation discussed above may be achieved using a corresponding number of crystals dimensioned to satisfy the corresponding number of derivative equations. The invention can be used to fabricate, including but not limited to, very temperature stable multiple order wave plates.

The foregoing description of preferred embodiments of the invention has been presented for purposes of illustration and description. It is not intended to be exhaustive or to limit the invention to the precise forms disclosed. Obviously many modifications and variations will be apparent to practitioners skilled in this art. It is intended that the scope of the invention be defined by the following claims and their equivalents.

## Claims

1.  An optical device (120) for operating upon optical signals being communicated between a first port and a second port and between the first port and a third port, the optical signals comprising a plurality of channels each having a different optical frequency centered on a corresponding gridline of a selected wavelength grid, the first port communicating odd channels (220) and even channels (230) on the grid, the second port communicating the odd channels (220) and the third port communicating the even channels (230), wherein adjacent orders of the odd (220) and even (230) channels are evenly spaced apart, the optical device (120) comprising:

    a linear polarizer (450) coupled to the first port for linearly polarizing optical signals; and,
    a plurality of wave plates (452) with a first and a second I/O interface, the plurality of wave plates (452) being optically coupled at the first I/O interface to the linear polarizer (450), and the plurality of wave plates (452) being configured to rotate linearly aligned odd and even channel polarization components of an optical beam to be orthogonal for one beam propagation direction therethrough and to rotate orthogonal odd and even channel polarization components of an optical beam to linear alignment for an opposing beam propagation direction therethrough,
    wherein each (340,342) of said plurality of wave plates (452) has a selected length and a selected index of refraction which are together determinative of a free spectral range (FSR) of the wave plate (340,342) corresponding to a spacing ($\Delta v$) between adjacent gridlines of the selected wavelength grid, and each of the plurality of wave plates (452) is tuned for even symmetry of frequency response with respect to a corresponding frequency in the selected wavelength grid,
    **characterised in that**:

        the linear polarizer (450) comprises:

            a polarization beam splitter/combiner (402) that splits an arbitrarily polarized optical beam into component beams with orthogonal polarization vectors for the one beam propagation direction therethrough and combines two component beams with orthogonal polarization vectors into the optical beam for the opposing beam propagation direction therethrough; and,
            a polarization rotator (404AB) that rotates component beams with orthogonal polarization vectors into linear alignment for the one beam propagation direction therethrough and rotates linearly aligned polarization vectors into orthogonal polarization vectors for the opposing beam propagation direction therethrough, and

each of the plurality of wave plates (452) is configured to operate as a half wave plate with respect to one of the odd (220) and even (230) channels of the optical beam and as a whole wave plate with respect to the other of the odd (220) and even (230) channels;
and further **characterised in that** the optical device (120) comprises a beam displacer/combiner (454) that optically couples the second I/O interface of the plurality of wave plates (452) with both the second and the third port, the beam displacer/combiner (454) displacing orthogonally polarized odd and even channel components of an optical beam for the one beam propagation direction therethrough and combining orthogonally polarized odd and even channel components of an optical beam for the opposing beam propagation direction therethrough.

2. The optical device of Claim 1, wherein the orientation of at least a selected one of the plurality of wave plates includes tilting of a normal to a surface of the selected one of the plurality of wave plates with respect to an optical path of the optical beam to provide tuning to even symmetry with the selected wavelength grid.

3. The optical device of Claim 1, wherein a polarization vector of the optical beam at the first I/O interface defines the z axis of an x-y-z Cartesian coordinate system, with propagation of the optical beam along the y-axis and with the optical axis of successive ones of the plurality of wave plates substantially oriented at one of a positive angle and a negative angle $\Phi_n$ with respect to one of the y-axis and the x-axis, where the angle $\Phi_1$ about the y-axis corresponds with the orientation of the optical axis of a first of the plurality of wave plates with respect to the polarization vector and n is an integer corresponding to the relative ordering of each one of the plurality of wave plates.

4. The optical device of Claim 3, wherein the optical axis of each successive one of the plurality of wave plates commencing with a first of the plurality of wave plates substantially exhibit the following cyclic relationship expressed as rotations of the successive optical axis of each successive one of the plurality of wave plates about the y axis :

a) the positive angle $\Phi_n$ about the z-axis followed by
b) the negative angle $\Phi_n$ about the z-axis, followed by
c) the positive angle $\Phi_n$ about the y-axis, followed by
d) the negative angle $\Phi_n$ about the y-axis, and again up to a last of the plurality of wave plates.

5. The optical device of Claim 1, wherein the angular orientation $\Phi_n$ of an optical axis of an $n^{th}$ one of a total of N of the plurality of wave plates with respect to the input polarization vector corresponds with the following expression:

$$\Phi n = (-1)^n \left[ \frac{\pi}{4} \times \left\{ \left( n + \frac{1 + 3 \times \left( (-1)^n \right)}{2} \right) - \frac{2i+1}{N} \right\} \right].$$

where N is the total number of the plurality of wave plates, n is an integer corresponding to the relative ordering of each one of the plurality of wave plates and i is an integer including zero.

6. The optical device of Claim 1, wherein the propagation path includes opposing propagation directions through at least a selected one of the plurality of wave plates.

7. The optical device of Claim 1, wherein each of the plurality of wave plates comprise a birefringent crystal.

8. The optical device of Claim 1 defining at least one of, a wavelength division multiplexer, a wavelength division demultiplexer, and an optical router.

9. The optical device of Claim 1, wherein at least one of said plurality of waveplates further comprises:

a) a primary birefringent element with a selected first length and first indices of refraction; and
b) a compensating birefringent element with a selected second length and a second indices of refraction distinct from the first indices of refraction; and, the first length, the second length, the first indices of refraction and the second indices of refraction together determinative of a combined optical pathlength difference substantially invariant with respect to temperature.

10. The optical device of Claim 9, wherein at least one of said plurality of waveplates further comprises:

   a plurality of birefringent elements each with a corresponding length together with index of refraction; and the corresponding lengths together with respective indexes of refraction of each of the plurality of birefringent elements of the at least one of said plurality of waveplates collectively determinative of a combined optical pathlength difference between an e-ray and an o-ray which is substantially invariant with respect to temperature.

11. The optical device of Claim 9, wherein the first length $L_1$, the second length $L_2$, the first indices of refraction at least $n_{o1}$, $n_{e1}$, the second indices of refraction $n_{o2}$, $n_{e2}$ substantially correspond to one another as follows:

$$FSR = \left(\frac{1}{2}\right)\left(\frac{c}{\left|\left((n_{e1} - n_{o1})L_1 \pm (n_{e2} - n_{o2})L_2\right)\right|}\right)$$

where c corresponds with the speed of light in a vacuum and FSR corresponds to a spacing between adjacent odd and even channels.

12. The optical device of Claim 11, wherein the primary birefringent element includes a first optic axis and the compensating birefringent element includes a second optic axis and the "+" sign corresponds to the case that the first optic axis is oriented with respect to the second optic axis in a substantially parallel orientation and the "-" sign corresponds to the case that the first optic axis is oriented with respect to the second optic axis in a substantially orthogonal orientation.

13. The optical device of Claim 9, wherein the first length $L_1$, the second length $L_2$, the first indices of refraction at least $n_{o1}$, $n_{e1}$, the second indices of refraction $n_{o2}$, $n_{e2}$ substantially correspond to one another as follows:

$$\frac{d\left((n_{e1} - n_{o1})L_1 + (n_{e2} - n_{02})L_2\right)}{dT} = 0$$

where T corresponds with temperature.

14. The optical device of Claim 13, wherein the primary birefringent element includes a first optic axis and the compensating birefringent element includes a second optic axis and the "+" sign corresponds to the case that the first optic axis is oriented with respect to the second optic axis in a substantially parallel orientation and the "-" sign corresponds to the case that the first optic axis is oriented with respect to the second optic axis in a substantially orthogonal orientation.

15. The optical device of Claim 9, wherein the primary birefringent element includes a first optic axis and the compensating birefringent element includes a second optic axis and the first optic axis oriented with respect to the second optic axis in one of a substantially parallel orientation and an orthogonal orientation.

16. The optical device of Claim 9, wherein the primary birefringent element and the secondary birefringent element of the at least one wave plate comprise distinct ones of a group of birefringent materials consisting of $YVO_4$, $LiNbO_3$, KTP, a-BBO, Calcite, Crystal Quartz and Rutile.

17. The optical device of Claim 1, with the plurality of crystals rotating both odd and even channel components of an optical beam between a linear and an orthogonal relationship depending on the propagation direction and substantially independent of a polarization orientation of the linearly polarized optical signals at the first I/O interface.

18. A method for splitting/combining odd and even channels of an optical beam being communicated between a first port and a second port and between the first port and a third port, the optical beam comprising a plurality of channels each having a different optical frequency centered on a corresponding gridline of a selected wavelength grid, the first port communicating odd channels (220) and even channels (230) on the grid, the second port communicating the odd channels (220) and the third port communicating the even channels (230), wherein adjacent orders of the odd (220) and even (230) channels are evenly spaced apart, said method for splitting/combining comprising:

linearly polarizing the optical beam at the first port; and,
successively retarding e-ray and o-ray components of the optical beam to rotate linearly aligned odd and even channel polarization components of the optical beam to be orthogonal for one beam propagation direction and to rotate orthogonal odd and even channel polarization components of an optical beam to linear alignment for an opposing beam propagation direction,
**characterised in that**:

the act of linearly polarizing comprises the acts of:

splitting an arbitrarily polarized optical beam into component beams with orthogonal polarization vectors for the one beam propagation direction and combining two component beams with orthogonal polarization vectors into the optical beam for the opposing beam propagation direction; and,
rotating component beams with orthogonal polarization vectors into linear alignment for the one beam propagation direction and rotating linearly aligned polarization vectors into orthogonal polarization vectors for the opposing beam propagation direction,

the act of successively retarding comprises successively retarding the e-ray and o-ray components of one of the odd channels and the even channels by integer multiples of $2\pi$ and of the other of the odd channels and the even channels by odd integer multiples of $\pi$, both at a free spectral range corresponding to the spacing between gridlines of the selected wavelength grid; and,
the method further comprises the act of displacing orthogonally polarized odd and even channel components of an optical beam for the one beam propagation direction and combining orthogonally polarized odd and even channel components of an optical beam for the opposing beam propagation direction.

19. The method for splitting/combining of Claim 18, wherein the act of successively retarding the e-ray and o-ray components further comprises the acts of:

orienting a polarization vector of the optical beam along the z-axis of an x-y-z Cartesian coordinate system with the optical beam propagating along the y-axis; and,
subjecting the propagating optical beam to successive optical axis substantially oriented at one of a positive angle and a negative angle $\Phi_n$ with respect to one of the y-axis and the x-axis, where the angle $\Phi_1$ about y-axis corresponds with the orientation of a first of the optical axis with respect to the polarization vector and n is an integer corresponding to the relative ordering of each one of the plurality of optical axis.

20. The method for splitting/combining of Claim 19, wherein the act of successively retarding the e-ray and o-ray components further comprises the acts of:

subjecting the optical beam to successive optical axis commencing with a first of the optical axis which substantially exhibit the following cyclic relationship expressed as rotations of the successive optical axis about the y-axis:

a) the positive angle $\Phi_n$ about the z-axis followed by
b) the negative angle $\Phi_n$ about the z-axis, followed by
c) the positive angle $\Phi_n$ about the y-axis, followed by
d) the negative angle $\Phi_n$ about the y-axis; and again up to a last of the optical axis.

21. The method for splitting/combining of Claim 18, wherein the act of successively retarding the e-ray and o-ray components further comprises the acts of:

orienting a polarization vector of the optical beam along the z-axis of an x-y-z Cartesian coordinate system with the optical beam propagating along the y-axis; and,
subjecting the propagating optical beam to successive optical axis, wherein the angular orientation $\Phi_n$ of an

n$^{th}$ one of the optical axes of a total of N optical axes along the optical beam path with respect to the input polarization vector corresponds with the following expression:

$$\Phi n = (-1)^{n}\left[\frac{\pi}{4}\times\left\{\left(n+\frac{1+3\times\left((-1)^{n}\right)}{2}\right)-\frac{2i+1}{N}\right\}\right].$$

where N is the total number of optical axes, n is an integer corresponding to the relative ordering of each one of the plurality of optical axes and i is an integer including zero.

22. The method for splitting/combining of Claim 18, wherein the act of successively retarding the e-ray and o-ray components further comprises the acts of:

   folding a propagation path of the optical beam at least twice across at least one of successive optical axes.

23. The method for splitting/combining of Claim 22, wherein the act of folding further comprises the acts of:

   folding along opposing propagation paths.

24. The method for splitting/combining of Claim 18, wherein the displacing and combining acts further comprise the acts of:

   turning the odd and even channel components of an optical beam through an angle, wherein the path of the odd and even channel components converge or diverge depending upon the polarization direction of the odd and even channel components and the propagation direction;
   rotating linearly aligned polarization vectors of the odd and even channel components into orthogonal polarization vectors and rotating odd and even channel components with orthogonal polarization vectors into linear alignment depending on the propagation direction; and,
   separating odd and even channel components with orthogonal polarization vectors into the optical beam and splitting an arbitrarily polarized optical beam into component beams with orthogonal polarization vectors depending on the propagation direction of the optical beam.

25. The method for splitting/combining of Claim 18, wherein the act of successively retarding further comprises the acts of:

   varying a sign of the difference in the relative retardation of the e-ray and o-ray components at least twice during each successive retardation in said acts of successively retarding to substantially compensate for temperature variations.

26. The method for splitting/combining of Claim 18, wherein the act of successively retarding further comprises the acts of:

   generating at least two substantially offsetting relative retardations of the e-ray components and o-ray components during each successive retardation in said acts of successively retarding to substantially compensate for temperature variations.

27. The method for splitting/combining of Claim 18, wherein the act of successively retarding further comprises the act of:

   tuning the odd and even channels to even symmetry with the selected wavelength grid.

28. The method for splitting/combining of Claim 18, wherein the displacing and combining acts further comprise the acts of:

   turning the odd and even channel components of an optical beam through an angle, wherein the path of the odd and even channel components converge or diverge depending upon the polarization direction of the odd and even channel components and the propagation direction;
   rotating linearly aligned polarization vectors of the odd and even channel components into orthogonal polarization vectors and rotating odd and even channel components with orthogonal polarization vectors into linear alignment depending on the propagation direction; and,
separating odd and even channel components with orthogonal polarization vectors into the optical beam and splitting an arbitrarily polarized optical beam into component beams with orthogonal polarization vectors depending on the propagation direction of the optical beam.

**Patentansprüche**

1. Optische Vorrichtung (120) zum Einwirken auf optische Signale, die zwischen einem ersten Anschluss und einem zweiten Anschluss und zwischen dem ersten Anschluss und einem dritten Anschluss kommuniziert werden, wobei die optischen Signale eine Vielheit von Kanälen umfassen, die jeweils eine verschiedene optische Frequenz aufweisen, die auf einer entsprechenden Gitterlinie eines selektierten Wellenlängengitters zentriert ist, wobei der erste Anschluss ungerade Kanäle (220) und gerade Kanäle (230) auf dem Gitter kommuniziert, der zweite Anschluss die ungeraden Kanäle (220) kommuniziert und der dritte Anschluss die geraden Kanäle (230) kommuniziert, wobei benachbarte Ordnungen der ungeraden (220) und geraden (230) Kanäle gleichmäßig beabstandet sind, wobei die optische Vorrichtung (120) umfasst:

   einen linearen Polarisator (450), der für lineare Polarisation optischer Signale an den ersten Anschluss gekoppelt ist; und,
   eine Vielheit von Wellenplättchen (452) mit einer ersten und einer zweiten Eingangs-/Ausgangs-Schnittstelle, wobei die Vielheit von Wellenplättchen (452) an der ersten Eingangs-/Ausgangs-Schnittstelle optisch an den linearen Polarisator (450) gekoppelt ist und die Vielheit von Wellenplättchen (452) konfiguriert ist, linear ausgerichtete ungerade und gerade Kanalpolarisationskomponenten eines optischen Strahls zu rotieren, um für eine Strahlfortpflanzungsrichtung durch die Wellenplättchen orthogonal zu sein und orthogonale ungerade und gerade Kanalpolarisationskomponenten eines optischen Strahls auf lineare Ausrichtung für eine entgegengesetzte Strahlfortpflanzungsrichtung durch die Wellenplättchen zu rotieren,
   wobei jedes (340, 342) der besagten Vielheit von Wellenplättchen (452) eine selektierte Länge und einen selektierten Brechungsindex aufweist, die zusammen für einen freien Spektralbereich (FSR) des Wellenplättchens (340, 342) bestimmend sind, der einem Abstand ($\Delta v$) zwischen benachbarten Gitterlinien des selektierten Wellenlängengitters entspricht und jedes der Vielheit von Wellenplättchen (452) auf gerade Symmetrie des Frequenzgangs in Bezug auf eine entsprechende Frequenz im selektierten Wellenlängengitter abgestimmt ist, **dadurch gekennzeichnet, dass**:

      der lineare Polarisator (450) umfasst:

         einen Polarisationsstrahlteiler/-kombinierer (402), der einen willkürlich polarisierten optischen Strahl in Teilstrahlen mit orthogonalen Polarisationsvektoren für die eine Strahlfortpflanzungsrichtung durch den Strahlteiler/-kombinierer teilt und zwei Teilstrahlen mit orthogonalen Polarisationsvektoren zum optischen Strahl für die entgegengesetzte Strahlfortpflanzungsrichtung durch den Strahlteiler/-kombinierer kombiniert; und
         einen Polarisationsrotator (404AB), der Teilstrahlen mit orthogonalen Polarisationsvektoren in lineare Ausrichtung für die eine Strahlfortpflanzungsrichtung durch den Strahlteiler/-kombinierer rotiert und linear ausgerichtete Polarisationsvektoren in orthogonale Polarisationsvektoren für die entgegengesetzte Stahlfortpflanzungsrichtung durch den Strahlteiler/-kombinierer rotiert und

      jedes Wellenplättchen der Vielheit von Wellenplättchen (452) konfiguriert ist, als ein halbes Wellenplättchen in Bezug auf den einen der ungeraden (220) und geraden (230) Kanäle des optischen Strahls und, als ein ganzes Wellenplättchen in Bezug auf den anderen der ungeraden (220) und geraden (230) Kanäle zu funktionieren;
      und weiter **dadurch gekennzeichnet, dass** die optische Vorrichtung (120) einen Strahlversetzer/-kombinierer (454) umfasst, der die zweite Eingabe-/Ausgabe-Schnittstelle der Vielheit von Wellenplättchen (452) mit sowohl dem zweiten als auch dem dritten Anschluss optisch koppelt, wobei der Strahlversetzer/-kombinierer (454) orthogonal polarisierte ungerade und gerade Kanalkomponenten eines optischen Strahls für die eine Strahlfortpflanzungsrichtung durch den Strahlversetzer/-kombinierer versetzt und orthogonal polarisierte ungerade und gerade Kanalkomponenten eines optischen Strahls für die entgegengesetzte Strahlfortpflanzungsrichtung durch den Strahlversetzer/-kombinierer kombiniert.

2. Optische Vorrichtung nach Anspruch 1, wobei die Orientierung von zumindest eines selektierten Wellenplättchens der Vielheit von Wellenplättchen das Neigen einer Flächennormalen zu einer Fläche des selektierten Wellenplättchens der Vielheit von Wellenplättchen in Bezug auf einen optischen Weg des optischen Strahls einschließt, um Abstimmung auf gerade Symmetrie mit dem selektierten Wellenlängengitter bereitzustellen.

3. Optische Vorrichtung nach Anspruch 1, wobei ein Polarisationsvektor des optischen Strahls an der ersten Eingangs-/Ausgangs-Schnittstelle die z-Achse eines kartesischen x-y-z-Koordinatensystems definiert, wobei Fortpflanzung des optischen Strahls entlang der y-Achse geschieht und wobei die optische Achse sukzessiver Wellenplättchen der Vielheit von Wellenplättchen im Wesentlichen in einem von einem positiven Winkel und einem negativen Winkel $\Phi_n$ in Bezug auf eine der y-Achse und der x-Achse orientiert ist, wo der Winkel $\Phi_1$ um die y-Achse der Orientierung der optischen Achse eines ersten Wellenplättchens der Vielheit von Wellenplättchen in Bezug auf den Polarisationsvektor entspricht und n eine Ganzzahl ist, die der relativen Ordnung jedes Wellenplättchens der Vielheit von Wellenplättchen entspricht.

4. Optische Vorrichtung nach Anspruch 3, wobei die optische Achse jedes sukzessiven Wellenplättchens der Vielheit von Wellenplättchen, beginnend mit einem ersten Wellenplättchen der Vielheit von Wellenplättchen, im Wesentlichen die folgende zyklische Beziehung zeigen, die als Rotationen der sukzessiven optischen Achse jedes sukzessiven Wellenplättchens der Vielheit von Wellenplättchen um die y-Achse ausgedrückt ist:

a) dem positiven Winkel $\Phi_n$ um die z-Achse gefolgt durch
b) den negativen Winkel $\Phi_n$ um die z-Achse gefolgt durch
c) den positiven Winkel $\Phi_n$ um die y-Achse, gefolgt durch
d) den negativen Winkel $\Phi_n$ um die y-Achse und wiederum bis zu einem letzten Wellenplättchen der Vielheit von Wellenplättchen.

5. Optische Vorrichtung nach Anspruch 1, wobei die Winkelorientierung $\Phi_n$ einer optischen Achse eines $n^{ten}$ Wellenplättchens einer Gesamtzahl von N der Vielheit von Wellenplättchen in Bezug auf den Eingangs-Polarisationsvektor dem folgenden Ausdruck entspricht:

$$\Phi n = (-1)^n \left[ \frac{\pi}{4} \times \left\{ \left( n + \frac{1 + 3 \times \left( (-1)^n \right)}{2} \right) - \frac{2i+1}{N} \right\} \right].$$

dabei gilt: N ist die Gesamtzahl der Vielheit von Wellenplättchen, n ist eine Ganzzahl, die der relativen Ordnung jedes Wellenplättchens der Vielheit von Wellenplättchen entspricht und i ist eine Ganzzahl, die Null einschließt.

6. Optische Vorrichtung nach Anspruch 1, wobei der Fortpflanzungsweg entgegengesetzte Fortpflanzungsrichtungen durch zumindest ein selektiertes Wellenplättchen der Vielheit von Wellenplättchen einschließt.

7. Optische Vorrichtung nach Anspruch 1, wobei jedes Wellenplättchen der Vielheit von Wellenplättchen ein doppelbrechendes Kristall umfasst.

8. Optische Vorrichtung nach Anspruch 1, die zumindest einen von einem Wellenlängenteilungs-Multiplexer, einem Wellenlängenteilungs-Demultiplexer und einem optischen Router definiert.

9. Optische Vorrichtung nach Anspruch 1, wobei zumindest ein Wellenplättchen der besagten Vielheit von Wellenplättchen weiter umfasst:

a) ein primäres doppelbrechendes Element mit einer selektierten ersten Länge und ersten Brechungsindexen; und
b) ein kompensierendes doppelbrechendes Element mit einer selektierten zweiten Länge und zweiten Brechungsindexen verschieden von den ersten Brechungsindexen; und die erste Länge, die zweite Länge, die ersten Brechungsindexe und die zweiten Brechungsindexe zusammen bestimmend für eine kombinierte optische Weglängendifferenz sind, die im Wesentlichen invariant in Bezug auf Temperatur ist.

10. Optische Vorrichtung nach Anspruch 9, wobei zumindest ein Wellenplättchen der besagten Vielheit von Wellenplättchen weiter umfasst:

eine Vielheit doppelbrechender Elemente, jedes mit einer entsprechenden Länge zusammen mit Brechungsindex; und die entsprechenden Längen zusammen mit jeweiligen Brechungsindexen jedes Elements der Vielheit von doppelbrechenden Elementen des zumindest einen Wellenplättchens besagter Vielheit von Wellenplättchen gemeinsam bestimmend für eine kombinierte optische Weglängendifferenz zwischen einem extraordinären Strahl und einem ordinären Strahl sind, die im Wesentlichen invariant in Bezug auf Temperatur ist.

11. Optische Vorrichtung nach Anspruch 9, wobei die erste Länge $L_1$, die zweite Länge $L_2$, die ersten Brechungsindexe zumindest $n_{o1}$, $n_{e1}$, die zweiten Brechungsindexe $n_{o2}$, $n_{e2}$ im Wesentlichen einander wie folgt entsprechen:

$$FSR = \left(\frac{1}{2}\right)\left(\frac{c}{\left|\left((n_{e1} - n_{o1})L_1 \pm (n_{e2} - n_{o2})L_2\right)\right|}\right)$$

dabei gilt: c entspricht der Lichtgeschwindigkeit in einem Vakuum und der freie Spektralbereich (FSR) entspricht einem Abstand zwischen benachbarten ungeraden und geraden Kanälen.

12. Optische Vorrichtung nach Anspruch 11, wobei das primäre doppelbrechende Element eine erste optische Achse einschließt und das kompensierende doppelbrechende Element eine zweite optische Achse einschließt und das "+" Zeichen dem Fall entspricht, dass die erste optische Achse in Bezug auf die zweite optische Achse in einer im Wesentlichen parallelen Orientierung orientiert ist und das "-" Zeichen dem Fall entspricht, dass die erste optische Achse in Bezug auf die zweite optische Achse in einer im Wesentlichen orthogonalen Orientierung orientiert ist.

13. Optische Vorrichtung nach Anspruch 9, wobei die erste Länge $L_1$, die zweite Länge $L_2$, die ersten Brechungsindexe zumindest $n_{o1}$. $n_{e1}$, die zweiten Brechungsindexe $n_{o2}$, $n_{e2}$ im Wesentlichen einander wie folgt entsprechen:

$$\frac{d\left((n_{e1} - n_{o1})L_1 + (n_{e2} - n_{02})L_2\right)}{dT} = 0$$

dabei gilt: T entspricht Temperatur.

14. Optische Vorrichtung nach Anspruch 13, wobei das primäre doppelbrechende Element eine erste optische Achse einschließt und das kompensierende doppelbrechende Element eine zweite optische Achse einschließt und das "+" Zeichen dem Fall entspricht, dass die erste optische Achse in Bezug auf die zweite optische Achse in einer im Wesentlichen parallelen Orientierung orientiert ist und das "-" Zeichen dem Fall entspricht, dass die erste optische Achse in Bezug auf die zweite optische Achse in einer im Wesentlichen orthogonalen Orientierung orientiert ist.

15. Optische Vorrichtung nach Anspruch 9, wobei das primäre doppelbrechende Element eine erste optische Achse einschließt und das kompensierende doppelbrechende Element eine zweite optische Achse einschließt und die erste optische Achse in Bezug auf die zweite optische Achse in einer im Wesentlichen parallelen Orientierung und in einer orthogonalen Orientierung orientiert ist.

16. Optische Vorrichtung nach Anspruch 9, wobei das primäre doppelbrechende Element und das zweite doppelbrechende Element des zumindest eines Wellenplättchens verschiedenartige Materialien einer Gruppe doppelbrechender Materialien umfassen, die aus $YVO_4$, $LiNbO_3$, KTP, a-BBO, Calcit, Kristallquarz und Rutil besteht.

17. Optische Vorrichtung nach Anspruch 1, wobei die Vielheit von Kristallen sowohl ungerade als auch gerade Kanalkomponenten eines optischen Strahls zwischen einer linearen und einer orthogonalen Beziehung, abhängig von der Fortpflanzungsrichtung und im Wesentlichen unabhängig von einer Polarisationsorientierung der linear polarisierten optischen Signale an der ersten Eingangs-/Ausgangs-Schnittstelle rotiert.

18. Verfahren zum Teilen/Kombinieren ungerader und gerader Kanäle eines optischen Strahls, der zwischen einem ersten Anschluss und einem zweiten Anschluss und zwischen dem ersten Anschluss und einem dritten Anschluss kommuniziert wird, wobei der optische Strahl eine Vielheit von Kanälen umfasst, die jeweils eine verschiedene optische Frequenz aufweisen, die auf einer entsprechenden Gitterlinie eines selektierten Wellenlängengitters zentriert ist, wobei der erste Anschluss ungerade Kanäle (220) und gerade Kanäle (230) auf das Gitter kommuniziert, der zweite Anschluss die ungeraden Kanäle (220) kommuniziert und der dritte Anschluss die geraden Kanäle (230) kommuniziert, wobei benachbarte Ordnungen der ungeraden (220) und geraden (230) Kanäle gleichmäßig beabstandet sind, wobei besagtes Verfahren zum Teilen/Kombinieren umfasst:

lineares Polarisieren des optischen Strahls am ersten Anschluss; und
sukzessives Verzögern von extraordinären und ordinären Strahlkomponenten des optischen Strahls, um linear ausgerichtete ungerade und gerade Kanalpolarisationskomponenten des optischen Strahls zu rotieren, um orthogonal für eine Strahlfortpflanzungsrichtung zu sein und orthogonale ungerade und gerade Kanalpolarisationskomponenten eines optischen Strahls auf lineare Ausrichtung für eine entgegengesetzte Strahlfortpflanzungsrichtung zu rotieren,
**dadurch gekennzeichnet, dass**:

die Handlung der linearen Polarisation folgende Handlungen umfasst:

Teilen eines willkürlich polarisierten optischen Strahls in Teilstrahlen mit orthogonalen Polarisationsvektoren für die eine Strahlfortpflanzungsrichtung und Kombinieren von zwei Teilstrahlen mit orthogonalen Polarisationsvektoren in den optischen Strahl für die entgegengesetzte Strahlfortpflanzungsrichtung; und
Rotieren von Teilstrahlen mit orthogonalen Polarisationsvektoren in lineare Ausrichtung für die eine Strahlfortpflanzungsrichtung und rotieren linear ausgerichteter Polarisationsvektoren in orthogonale Polarisationsvektoren für die entgegengesetzte Stahlfortpflanzungsrichtung,

wobei die Handlung sukzessiver Verzögerung sukzessive Verzögerung der extraordinären und ordinären Strahlteile von einem der ungeraden Kanäle und der geraden Kanäle durch ganzzahlige Vielfache von $2\pi$ und des anderen der ungeraden Kanäle und der geraden Kanäle durch ungerade ganzzahlige Vielfache von $\pi$ umfasst, beide in einem freien Spektralbereich, der dem Raum zwischen Gitterlinien des selektierten Wellenlängengitters entspricht; und
das Verfahren weiter die Handlung der Versetzung orthogonal polarisierter ungerader und gerader Kanalkomponenten eines optischen Strahls für die eine Strahlfortpflanzungsrichtung und der Kombination orthogonal polarisierter ungerader und gerader Kanalkomponenten eines optischen Strahls für die entgegengesetzte Strahlfortpflanzungsrichtung umfasst.

19. Verfahren zum Teilen/Kombinieren nach Anspruch 18, wobei die Handlung der sukzessiven Verzögerung der extraordinären und ordinären Strahlkomponenten weiter folgende Handlungen umfasst:

Orientieren eines Polarisationsvektors des optischen Strahls entlang der z-Achse eins kartesischen x-y-z-Koordinatensystems, wobei sich der optische Strahl entlang der y-Achse fortpflanzt; und
Unterwerfen des sich fortpflanzenden optischen Strahls sukzessiven optischen Achsen, die im Wesentlichen in einem eines positiven Winkels und eines negativen Winkels $\Phi_n$ in Bezug auf eine der y-Achse und der x-Achse orientiert ist, wo der Winkel $\Phi_1$, um die y-Achse der Orientierung einer ersten der optischen Achse in Bezug auf den Polarisationsvektor entspricht und n eine Ganzzahl ist, die der relativen Ordnung jeder der Vielheit von optischer Achse entspricht.

20. Verfahren zum Teilen/Kombinieren nach Anspruch 19, wobei die Handlung der sukzessiven Verzögerung der extraordinären und ordinären Strahlkomponenten weiter folgende Handlungen umfasst:

Unterwerfen des optischen Strahls sukzessiven optischen Achsen, beginnend mit einer ersten der optischen Achse, die im Wesentlichen folgende zyklische Beziehung zeigen, die als Rotationen der sukzessiven optischen Achse um die y-Achse ausgedrückt ist:

a) dem positiven Winkel $\Phi_n$, um die z-Achse gefolgt durch
b) den negativen Winkel $\Phi_n$ um die z-Achse, gefolgt durch
c) den positiven Winkel $\Phi_n$, um die y-Achse, gefolgt durch
d) den negativen Winkel $\Phi_n$ um die y-Achse; und wiederum bis zu einer letzten Achse der optischen Achsen.

21. Verfahren zum Teilen/Kombinieren nach Anspruch 18, wobei die Handlung der sukzessiven Verzögerung der extraordinären und ordinären Strahlkomponenten weiter folgende Handlungen umfasst:

Orientieren eines Polarisationsvektors des optischen Strahls entlang der z-Achse eines kartesischen x-y-z-Koordinatensystems, wobei sich der optische Strahl entlang der y-Achse fortpflanzt; und

Unterwerfen des sich fortpflanzenden optischen Strahls sukzessiven optischen Achsen, wobei die Winkelorientierung $\Phi_n$ einer n-ten Achse der optischen Achsen einer Gesamtzahl N optischer Achsen entlang des optischen Strahlenwegs in Bezug auf den Eingangs-Polarisationsvektor dem folgenden Ausdruck entspricht:

$$\Phi n = (-1)^n \left[ \frac{\pi}{4} \times \left\{ \left( n + \frac{1 + 3 \times ((-1)^n)}{2} \right) - \frac{2i+1}{N} \right\} \right].$$

dabei gilt: N ist die Gesamtzahl der optischen Achsen, n ist eine Ganzzahl, die der relativen Ordnung jeder Achse der Vielheit optischer Achsen entspricht und i ist eine Ganzzahl, die Null einschließt.

22. Verfahren zum Teilen/Kombinieren nach Anspruch 18, wobei die Handlung der sukzessiven Verzögerung der extraordinären und ordinären Strahlkomponenten weiter folgende Handlungen umfasst:

Knicken eines Fortpflanzungswegs des optischen Strahls zumindest zweimal über zumindest eine Achse sukzessiver optischer Achsen.

23. Verfahren zum Teilen/Kombinieren nach Anspruch 22, wobei die Handlung des Knickens weiter folgende Handlung umfasst:

Knicken entlang entgegengesetzter Fortpflanzungswege.

24. Verfahren zum Teilen/Kombinieren nach Anspruch 18, wobei die Handlungen Versetzen und Kombinieren weiter folgende Handlungen umfassen:

Drehen der ungeraden und geraden Kanalkomponenten eines optischen Strahls durch einen Winkel, wobei der Weg der ungeraden und geraden Kanalkomponenten abhängig von der Polarisationsrichtung der ungeraden und geraden Kanalkomponenten und der Fortpflanzungsrichtung konvergiert oder divergiert;

Rotieren linear ausgerichteter Polarisationsvektoren der ungeraden und geraden Kanalkomponenten in orthogonale Polarisationsvektoren und Rotieren ungerader und gerader Kanalkomponenten mit orthogonalen Polarisationsvektoren, abhängig von der Fortpflanzungsrichtung, in lineare Ausrichtung; und,

Trennen ungerader und gerader Kanalkomponenten mit orthogonalen Polarisationsvektoren in den optischen Strahl und teilen eines willkürlich polarisierten optischen Strahls, abhängig von der Fortpflanzungsrichtung des optischen Strahls, in Komponentenstrahlen mit orthogonalen Polarisationsvektoren.

25. Verfahren zum Teilen/Kombinieren nach Anspruch 18, wobei die Handlung der sukzessiven Verzögerung weiter folgende Handlungen umfasst:

Variieren eines Zeichens der Differenz in der relativen Verzögerung der extraordinären und ordinären Strahlkomponenten zumindest zweimal während jeder sukzessiven Verzögerung in besagten Handlungen sukzessiver Verzögerung, um im Wesentlichen für Temperaturschwankungen zu kompensieren.

26. Verfahren zum Teilen/Kombinieren nach Anspruch 18, wobei die Handlung der sukzessiven Verzögerung weiter folgende Handlungen umfassen:

Generieren von zumindest zwei im Wesentlichen ausgleichender relativen Verzögerungen der extraordinären und ordinären Strahlkomponenten während jeder sukzessiven Verzögerung in besagten Handlungen sukzessiver Verzögerung, um im Wesentlichen für Temperaturschwankungen zu kompensieren.

27. Verfahren zum Teilen/Kombinieren nach Anspruch 18, wobei die Handlung der sukzessiven Verzögerung weiter folgende Handlung umfasst:

Abstimmen der ungeraden und geraden Kanäle auf gerade Symmetrie mit dem selektierten Wellenlängengitter.

**28.** Verfahren zum Teilen/Kombinieren nach Anspruch 18, wobei die Handlungen Versetzen und Kombinieren weiter folgende Handlungen umfassen:

Drehen der ungeraden und geraden Kanalkomponenten eines optischen Strahls durch einen Winkel, wobei der Weg der ungeraden und geraden Kanalkomponenten, abhängig von der Polarisationsrichtung der ungeraden und geraden Kanalkomponenten und der Fortpflanzungsrichtung, konvergiert oder divergiert;

Rotieren linear ausgerichteter Polarisationsvektoren der ungeraden und geraden Kanalkomponenten in orthogonale Polarisationsvektoren und Rotieren ungerader und gerader Kanalkomponenten mit orthogonalen Polarisationsvektoren, abhängig von der Fortpflanzungsrichtung, in lineare Ausrichtung; und,

Trennen ungerader und gerader Kanalkomponenten mit orthogonalen Polarisationsvektoren in den optischen Strahl und teilen eines willkürlich polarisierten optischen Strahls, abhängig von der Fortpflanzungsrichtung des optischen Strahls, in Teilstrahlen mit orthogonalen Polarisationsvektoren.

**Revendications**

**1.** Dispositif optique (120) fonctionnant lors de signaux optiques communiqués entre un premier port et un second port et entre le premier port et un troisième port, les signaux optiques comportant une pluralité de canaux ayant chacun une différente fréquence optique centrée sur une ligne de grille correspondante d'une grille de longueurs d'ondes sélectionnée, le premier port communiquant des canaux impairs (220) et des canaux pairs (230) sur la grille, le second port communiquant les canaux impairs (220) et le troisième port communiquant les canaux pairs (230), dans lequel des ordres adjacents des canaux impairs (220) et pairs (230) sont espacés les uns des autres de manière uniforme, le dispositif optique (120) comportant :

un polariseur linéaire (450) couplé au niveau du premier port pour polariser linéairement des signaux optiques ; et une pluralité de lames d'ondes (452) ayant une première et une seconde interface d'E/S, la pluralité de lames d'ondes (452) étant couplée optiquement au niveau de la première interface d'E/S au polariseur linéaire (450), et la pluralité de lames d'ondes (452) étant configurée pour faire pivoter les composants de polarisation des canaux impairs et pairs alignés linéairement d'un faisceau optique afin de les rendre orthogonaux pour un sens de propagation du faisceau par le biais de celles-ci et pour faire pivoter les composants de polarisation des canaux impairs et pairs orthogonaux d'un faisceau optique afin de les aligner linéairement pour un sens opposé de propagation du faisceau par le biais de celles-ci,

dans lequel chaque lame d'onde (340, 342) de ladite pluralité de lames d'ondes (452) a une longueur sélectionnée et un indice de réfraction sélectionné qui déterminent ensemble un intervalle spectral libre (FSR) de la lame d'onde (340, 342) correspondant à un espace ($\Delta$V) entre des lignes de grille adjacentes de la grille de longueurs d'ondes sélectionnée, et chaque lame d'onde de la pluralité de lames d'ondes (452) est accordée à des fins de symétrie uniforme de la réponse de fréquence par rapport à une fréquence correspondante dans la grille de longueurs d'ondes sélectionnée,

**caractérisé en ce que** :

le polariseur linéaire (450) comporte :

un diviseur/combineur de faisceau de polarisation (402) qui divise un faisceau optique polarisé arbitrairement afin de le transformer en faisceaux composants à vecteurs de polarisation orthogonaux pour ledit un sens de propagation du faisceau par le biais de celui-ci et qui combine deux faisceaux composants à vecteurs de polarisation orthogonaux afin de les transformer en faisceau optique pour le sens opposé de propagation du faisceau par le biais de celui-ci ; et

un rotateur de polarisation (404AB) qui fait pivoter des faisceaux composants à vecteurs de polarisation orthogonaux afin de les aligner linéairement pour ledit un sens de propagation du faisceau par le biais de celui-ci et qui fait pivoter les vecteurs de polarisation alignés linéairement afin de les transformer en vecteurs de polarisation orthogonaux pour ledit sens opposé de propagation du faisceau par le biais de celui-ci,

et

chaque lame d'onde de la pluralité de lames d'ondes (452) est configurée pour fonctionner sous la forme d'une lame demi-onde par rapport à l'un des canaux impairs (220) et pairs (230) du faisceau optique et sous la forme d'une lame pleine-onde par rapport à l'autre des canaux impairs (220) et pairs (230) ;

et **caractérisé par** ailleurs en ce que le dispositif optique (120) comporte un déplaceur/combineur de faisceau (454) qui couple optiquement la seconde interface d'E/S de la pluralité de lames d'ondes (452) au niveau, à la fois, du second port et du troisième port, le déplaceur/combineur de faisceau (454) déplaçant les composants des canaux impairs et pairs polarisés orthogonalement d'un faisceau optique pour ledit un sens de propagation du faisceau par le biais de celui-ci et combinant les composants des canaux impairs et pairs polarisés orthogonalement d'un faisceau optique pour ledit sens opposé de propagation du faisceau par le biais de celui-ci.

2. Dispositif optique selon la revendication 1, dans lequel l'orientation d'au moins une lame d'onde sélectionnée de la pluralité de lames d'ondes comprend l'inclinaison d'une normale à une surface de la lame d'onde sélectionnée de la pluralité de lames d'ondes par rapport à un trajet optique du faisceau optique pour procurer un accord à des fins de symétrie uniforme relativement à la grille de longueurs d'ondes sélectionnée.

3. Dispositif optique selon la revendication 1, dans lequel un vecteur de polarisation du faisceau optique au niveau de la première interface d'E/S définit l'axe z d'un système de coordonnées cartésiennes x-y-z, la propagation du faisceau optique allant le long de l'axe y et l'axe optique des lames d'ondes successives de la pluralité de lames d'ondes étant sensiblement orienté au niveau de l'un d'un angle positif et d'un angle négatif $\Phi_n$ par rapport à l'un de l'axe y et de l'axe x, où l'angle $\Phi_1$ autour de l'axe y correspond à l'orientation de l'axe optique d'une première lame d'onde de la pluralité de lames d'ondes par rapport au vecteur de polarisation et n est un entier correspondant à la mise en ordre relative de chaque lame d'onde de la pluralité de lames d'ondes .

4. Dispositif optique selon la revendication 3, dans lequel les axes optiques de chaque lame d'onde successive de la pluralité de lames d'ondes en commençant par une première lame d'onde de la pluralité de lames d'ondes présentent sensiblement la relation cyclique suivante exprimée sous la forme de rotations des axes optiques successifs de chaque lame d'onde successive de la pluralité de lames d'ondes autour de l'axe y :

   a) l'angle positif $\Phi_n$ autour de l'axe z, suivi de
   b) l'angle négatif $\Phi_n$ autour de l'axe z, suivi de
   c) l'angle positif $\Phi_n$ autour de l'axe y, suivi de
   d) l'angle négatif $\Phi_n$, autour de l'axe y, et à nouveau jusqu'à une dernière lame d'onde de la pluralité de lames d'ondes.

5. Dispositif optique selon la revendication 1, dans lequel l'orientation angulaire $\Phi_n$ d'un axe optique d'une $n^e$ lame d'onde d'un total de N lames d'ondes de la pluralité de lames d'ondes par rapport au vecteur de polarisation d'entrée correspond à l'expression suivante :

$$\Phi n = (-1)^n \left[ \frac{\pi}{4} \times \left\{ \left( n + \frac{1 + 3 \times \left( (-1)^n \right)}{2} \right) - \frac{2i+1}{N} \right\} \right].$$

où N est le nombre total de la pluralité de lames d'ondes, n est un entier correspondant à la mise en ordre relative de chaque lame d'onde de la pluralité de lames d'ondes et i est un entier comprenant zéro.

6. Dispositif optique selon la revendication 1, dans lequel le trajet de propagation comprend les sens opposés de propagation par le biais d'au moins une lame d'onde sélectionnée de la pluralité de lames d'ondes.

7. Dispositif optique selon la revendication 1, dans lequel chaque lame d'onde de la pluralité de lames d'ondes comporte un cristal biréfringent.

8. Dispositif optique selon la revendication 1, définissant au moins l'un parmi un multiplexeur en longueur d'onde, un démultiplexeur en longueur d'onde, et un routeur optique.

9. Dispositif optique selon la revendication 1, dans lequel au moins une lame d'onde de ladite pluralité de lames d'ondes comporte par ailleurs :

   a) un élément biréfringent primaire ayant une première longueur sélectionnée et des premiers indices de réfraction ; et

b) un élément biréfringent de compensation ayant une seconde longueur sélectionnée et des seconds indices de réfraction distincts des premiers indices de réfraction ; et, la première longueur, la seconde longueur, les premiers indices de réfraction et les seconds indices de réfraction déterminant ensemble une différence sensiblement invariante des longueurs combinées des trajets optiques par rapport à la température.

10. Dispositif optique selon la revendication 9, dans lequel au moins une lame d'onde de ladite pluralité de lames d'ondes comporte par ailleurs :

une pluralité d'éléments biréfringents ayant chacun une longueur correspondante ainsi qu'un indice de réfraction ; et les longueurs correspondantes combinées avec les indices de réfraction respectifs de chaque élément biréfringent de la pluralité d'éléments biréfringents de ladite au moins une lame d'onde de ladite pluralité de lames d'ondes déterminant collectivement une différence de longueurs combinées des trajets optiques entre un rayon-e et un rayon-o qui est sensiblement invariante par rapport à la température.

11. Dispositif optique selon la revendication 9, dans lequel la première longueur $L_1$, la seconde longueur $L_2$, les premiers indices de réfraction au moins $n_{o1}$, $n_{e1}$, les seconds indices de réfraction $n_{o2}$, $n_{e2}$ correspondent sensiblement les uns par rapport aux autres comme suit :

$$FSR = \left(\frac{1}{2}\right)\left(\frac{c}{\left|\left((n_{e1}-n_{o1})L_1 \pm (n_{e2}-n_{o2})L_2\right)\right|}\right)$$

où c correspond à la vitesse de la lumière dans un vide et FSR correspond à un espace entre des canaux impairs et pairs adjacents.

12. Dispositif optique selon la revendication 11, dans lequel l'élément biréfringent primaire comprend un premier axe optique et l'élément biréfringent de compensation comprend un second axe optique et le signe « + » correspond au cas où le premier axe optique est orienté par rapport au second axe optique selon une orientation sensiblement parallèle et le signe « - » correspond au cas où le premier axe optique est orienté par rapport au second axe optique selon une orientation sensiblement orthogonale.

13. Dispositif optique selon la revendication 9, dans lequel la première longueur $L_1$, la seconde longueur $L_2$, les premiers indices de réfraction au moins $n_{o1}$, $n_{e1}$, les seconds indices de réfraction $n_{o2}$, $n_{e2}$ correspondent sensiblement les uns par rapport aux autres comme suit :

$$\frac{d\left((n_{e1}-n_{o1})L_1 + (n_{e2}-n_{o2})L_2\right)}{dT} = 0$$

où T correspond à la température.

14. Dispositif optique selon la revendication 13, dans lequel l'élément biréfringent primaire comprend un premier axe optique et l'élément biréfringent de compensation comprend un second axe optique et le signe « + » correspond au cas où le premier axe optique est orienté par rapport au second axe optique selon une orientation sensiblement parallèle et le signe « - » correspond au cas où le premier axe optique est orienté par rapport au second axe optique selon une orientation sensiblement orthogonale.

15. Dispositif optique selon la revendication 9, dans lequel l'élément biréfringent primaire comprend un premier axe optique et l'élément biréfringent de compensation comprend un second axe optique et le premier axe optique étant orienté par rapport au second axe optique selon l'une d'une orientation sensiblement parallèle et d'une orientation orthogonale.

16. Dispositif optique selon la revendication 9, dans lequel l'élément biréfringent primaire et l'élément biréfringent secondaire de ladite au moins une lame d'onde comportent des matériaux distincts parmi un groupe de matériaux biréfringents constitué par $YVO_4$, $LiNbO_3$, KTP, a-BBO, la Calcite, le Cristal de Quartz et le Rutile.

**17.** Dispositif optique selon la revendication 1, la pluralité de cristaux faisant pivoter à la fois les composants des canaux impairs et pairs d'un faisceau optique entre une relation linéaire et une relation orthogonale en fonction du sens de propagation et sensiblement indépendamment d'une orientation de polarisation des signaux optiques polarisés linéairement au niveau de la première interface d'E/S.

**18.** Procédé permettant de diviser/combiner des canaux impairs et pairs d'un faisceau optique communiqués entre un premier port et un second port et entre le premier port et un troisième port, le faisceau optique comportant une pluralité de canaux ayant chacun une différente fréquence optique centrée sur une ligne de grille correspondante d'une grille de longueurs d'ondes sélectionnée, le premier port communiquant des canaux impairs (220) et des canaux pairs (230) sur la grille, le second port communiquant les canaux impairs (220) et le troisième port communiquant les canaux pairs (230), dans lequel des ordres adjacents des canaux impairs (220) et pairs (230) sont espacés les uns des autres de manière uniforme, ledit procédé permettant de diviser/combiner comportant :

polariser linéairement le faisceau optique au niveau du premier port ; et,
retarder successivement les composants de type rayon-e et rayon-o du faisceau optique pour faire pivoter les composants de polarisation des canaux impairs et pairs alignés linéairement d'un faisceau optique afin de les rendre orthogonaux pour un sens de propagation du faisceau et pour faire pivoter les composants de polarisation des canaux impairs et pairs orthogonaux d'un faisceau optique afin de les aligner linéairement pour un sens opposé de propagation du faisceau,
**caractérisé en ce que** :

l'action consistant à polariser linéairement comporte les actions consistant à :

diviser un faisceau optique polarisé arbitrairement afin de le transformer en faisceaux composants à vecteurs de polarisation orthogonaux pour ledit un sens de propagation du faisceau et combiner deux faisceaux composants à vecteurs de polarisation orthogonaux afin de les transformer en faisceau optique pour ledit sens opposé de propagation du faisceau ; et,
faire pivoter des faisceaux composants à vecteurs de polarisation orthogonaux afin de les aligner linéairement pour ledit un sens de propagation du faisceau et faire pivoter les vecteurs de polarisation alignés linéairement afin de les transformer en vecteurs de polarisation orthogonaux pour ledit sens opposé de propagation du faisceau,

l'action consistant à retarder successivement comporte retarder successivement les composants de type rayon-e et rayon-o de l'un des canaux impairs et des canaux pairs par multiples entiers de $2\pi$ et de l'autre des canaux impairs et des canaux pairs par multiples entiers impairs de $\pi$, les deux au niveau d'un intervalle spectral libre correspondant à l'espace entre des lignes de grille de la grille de longueurs d'ondes sélectionnée ; et,
le procédé comporte par ailleurs l'action consistant à déplacer les composants des canaux impairs et pairs polarisés orthogonalement d'un faisceau optique pour ledit un sens de propagation du faisceau et combiner les composants des canaux impairs et pairs polarisés orthogonalement d'un faisceau optique pour ledit sens opposé de propagation du faisceau.

**19.** Procédé permettant de diviser/combiner selon la revendication 18, dans lequel l'action consistant à retarder successivement les composants de type rayon-e et rayon-o comporte par ailleurs les actions consistant à :

orienter un vecteur de polarisation du faisceau optique le long de l'axe z d'un système de coordonnées cartésiennes x-y-z, le faisceau optique se propageant le long de l'axe y ; et,
soumettre le faisceau optique se propageant à des axes optiques successifs orientés sensiblement au niveau de l'un d'un angle positif et d'un angle négatif $\Phi_n$ par rapport à l'un de l'axe y et de l'axe x, où l'angle $\Phi_1$ autour de l'axe y correspond à l'orientation d'un premier des axes optiques par rapport au vecteur de polarisation et n est un entier correspondant à la mise en ordre relative de chaque axe optique de la pluralité d'axes optiques.

**20.** Procédé permettant de diviser/combiner selon la revendication 19, dans lequel l'action consistant à retarder successivement les composants de type rayon-e et rayon-o comporte par ailleurs les actions consistant à :

soumettre le faisceau optique à des axes optiques successifs en commençant par un premier des axes optiques qui présentent sensiblement la relation cyclique suivante exprimée sous la forme de rotations des axes optiques successifs autour de l'axe y :

a) l'angle positif $\Phi_n$ autour de l'axe z, suivi de

b) l'angle négatif $\Phi_n$ autour de l'axe z, suivi de

c) l'angle positif $\Phi_n$ autour de l'axe y, suivi de

d) l'angle négatif $\Phi_n$, autour de l'axe y, et à nouveau jusqu'à un dernier des axes optiques.

**21.** Procédé permettant de diviser/combiner selon la revendication 18, dans lequel l'action consistant à retarder successivement les composants de type rayon-e et rayon-o comporte par ailleurs les actions consistant à :

orienter un vecteur de polarisation du faisceau optique le long de l'axe z d'un système de coordonnées cartésiennes x-y-z, le faisceau optique se propageant le long de l'axe y ; et,

soumettre le faisceau optique se propageant à des axes optiques successifs, dans lequel l'orientation angulaire $\Phi_n$ d'un $n^e$ axe optique des axes optiques d'un total de N axes optiques le long du trajet du faisceau optique par rapport au vecteur de polarisation d'entrée correspond à l'expression suivante :

$$\Phi n = (-1)^n \left[ \frac{\pi}{4} \times \left\{ \left( n + \frac{1 + 3 \times ((-1)^n)}{2} \right) - \frac{2i+1}{N} \right\} \right].$$

où N est le nombre total d'axes optiques, n est un entier correspondant à la mise en ordre relative de chaque axe optique de la pluralité d'axes optiques et i est un entier comprenant zéro.

**22.** Procédé permettant de diviser/combiner selon la revendication 18, dans lequel l'action consistant à retarder successivement les composants de type rayon-e et rayon-o comporte par ailleurs les actions consistant à :

plier un trajet de propagation du faisceau optique au moins deux fois en travers d'au moins l'un des axes optiques successifs.

**23.** Procédé permettant de diviser/combiner selon la revendication 22, dans lequel l'action consistant à plier comporte par ailleurs les actions consistant à :

plier le long des trajets de propagation opposés.

**24.** Procédé permettant de diviser/combiner selon la revendication 18, dans lequel les actions consistant à déplacer et à combiner comportent par ailleurs les actions consistant à :

tourner les composants des canaux impairs et pairs d'un faisceau optique selon un angle, dans lequel les trajets des composants des canaux impairs et pairs convergent ou divergent en fonction du sens de polarisation des composants des canaux impairs et pairs et du sens de propagation ;

faire pivoter des vecteurs de polarisation alignés linéairement des composants des canaux impairs et pairs afin de les transformer en vecteurs de polarisation orthogonaux et faire pivoter des composants des canaux impairs et pairs ayant des vecteurs de polarisation orthogonaux afin de les transformer en vecteurs de polarisation alignés linéairement en fonction du sens de propagation ; et,

séparer des composants des canaux impairs et pairs ayant des vecteurs de polarisation orthogonaux dans le faisceau optique et diviser un faisceau optique polarisé arbitrairement en faisceaux composants à vecteurs de polarisation orthogonaux en fonction du sens de propagation du faisceau optique.

**25.** Procédé permettant de diviser/combiner selon la revendication 18, dans lequel l'action consistant à retarder successivement comporte par ailleurs les actions consistant à :

varier un signe de la différence dans le retard relatif des composants de type rayon-e et rayon-o au moins deux fois pendant chaque retard successif dans lesdites actions consistant à retarder successivement afin de compenser sensiblement les variations de température.

**26.** Procédé permettant de diviser/combiner selon la revendication 18, dans lequel l'action consistant à retarder successivement comporte par ailleurs les actions consistant à :

générer au moins deux retards relatifs sensiblement compensateurs des composants de type rayon-e et des compostants de type rayon-o pendant chaque retard successif dans lesdites actions consistant à retarder successivement afin de compenser sensiblement les variations de température.

27. Procédé permettant de diviser/combiner selon la revendication 18, dans lequel l'action consistant à retarder successivement comporte par ailleurs l'action consistant à :

accorder les canaux impairs et pairs à des fins de symétrie uniforme par rapport à la grille de longueurs d'ondes sélectionnée.

28. Procédé permettant de diviser/combiner selon la revendication 18, dans lequel les actions consistant à déplacer et à combiner comportent par ailleurs les actions consistant à :

tourner les composants des canaux impairs et pairs d'un faisceau optique selon un angle, dans lequel les trajets des composants des canaux impairs et pairs convergent ou divergent en fonction du sens de polarisation des composants des canaux impairs et pairs et du sens de propagation ;
faire pivoter des vecteurs de polarisation alignés linéairement des composants des canaux impairs et pairs afin de les transformer en vecteurs de polarisation orthogonaux et faire pivoter des composants des canaux impairs et pairs ayant des vecteurs de polarisation orthogonaux afin de les transformer en vecteurs de polarisation alignés linéairement en fonction du sens de propagation ; et,
séparer des composants des canaux impairs et pairs ayant des vecteurs de polarisation orthogonaux dans le faisceau optique et diviser un faisceau optique polarisé arbitrairement en faisceaux composants à vecteurs de polarisation orthogonaux en fonction du sens de propagation du faisceau optique.

FIG. 1

EP 1 163 751 B1

**FIG. 2A**

1549.4  1549.6  1549.8  1550.0  1550.2  1550.4

1  2  3  4  5  6

Δν  25 GHz

210
212  214
220

**FIG. 2B**

1549.4  1549.6  1549.8  1550.0  1550.2  1550.4

0 dB

-5 dB

200  200  200
202  202  202

**FIG. 2C**

220

1549.4  1549.8  1550.2

1  3  5

50 GHz  50 GHz

**FIG. 2D**

230

1549.6  1550.0  1550.4

2  4  6

50 GHz  50 GHz

33

FIG. 2E

FIG. 2F

EP 1 163 751 B1

FIG. 3A

FIG. 3C

FIG. 3E

FIG. 3B

FIG. 3D

FIG. 3F

EP 1 163 751 B1

EP 1 163 751 B1

FIG. 3K

FIG. 3I

FIG. 3G

FIG. 3L

FIG. 3J

FIG. 3H

36

FIG. 3M

EP 1 163 751 B1

FIG. 4B

FIG. 4A

EP 1 163 751 B1

TOP VIEW

FIG. 4D

SIDE VIEW

FIG. 4C

FIG. 4E

EP 1 163 751 B1

PATH

2 → 3 — 4a ⌐ 4b

6 ← 5

**FIG. 5C**

$O_{a5} = 45$ $O_{a6} = 90$

$O_{a1}$ $O_{a2} = -O_{a1}$

**FIG. 5B**

340

z

**FIG. 5A**

z
y
x

A $O_{a1}$

2

3

500

6

$O_{a6}$ 4a $O_{a5}$

$O_{a2}$

A

5

340

4b

342

514

512

510

**FIG. 5D**

2

$O_{a1}$ 3

4a $O_{a2}$

$O_{a5}$ 4b

$O_{a6}$ 4c

$O_{a2}$ 5

6 $O_{a1}$

A A

$O_{B2} = O_{B4} - 90$

342

346

$O_{B4}$

**FIG. 6B**

PATH

3

5

2

4

6

**FIG. 6C**

652

606

2

4

6

$O_{B4}$

$O_{B2}$

3

5

602

604

346

342

**FIG. 6A**

y

z

x

6

$O_{B2}$

5

$O_{B2}$

$O_{B4}$

4

3

$O_{B4}$

2

**FIG. 6D**

INTERLEAVER

FIG. 6E     TOP VIEW

FIG. 6F

EP 1 163 751 B1

42

# 2 Stage INTERLEAVER

FIG. 7A    TOP VIEW

FIG. 7B

EP 1 163 751 B1

$O_{a1}$

$O_{a2}$

2

320

3

322

4

z

y

x

FIG. 8A

$O_{a1}$

$O_{a2}$

z

x

320

FIG. 8B

EP 1 163 751 B1

FIG. 8D

FIG. 8C

FIG. 8F

FIG. 8E

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S.E. Harris et al.** Optical Network Synthesis Using Birefringent Crystals. *JOURNAL OF THE OPTICAL SOCIETY OF AMERICA,* October 1964, vol. 54 (10